# EUROPEAN PATENT APPLICATION

(11) **EP 4 850 882 A1**
(43) Date of publication of application: **09.12.2026**
(21) Application number: 25181141.0
(22) Date of filing: 05.06.2025
(51) Int. Cl.: B29B 17/02, B32B 43/00, B29K 23/00, B29L 9/00

(54) **RELEASABLE ENCAPSULATING LAYERS FOR ENCAPSULATED OBJECTS**

(71) Applicant: Nederlandse Organisatie voor toegepast- natuurwetenschappelijk onderzoek TNO, 2595 DA 's-Gravenhage (NL)
(72) Inventor: The designation of the inventor has not yet been filed
(74) Representative: Nederlandsch Octrooibureau

(57) **Abstract**

The present disclosure concerns a process for delaminating an encapsulated object, wherein a coating or encapsulant can be easily removed from the object when it is placed under release conditions, whereas the coating or encapsulant remain stably adhered onto the object under normal operating conditions. This process is particularly suitable in the context of recycling objects such as solar panels. A releasable layer is employed as encapsulant, optionally in combination with a release promoting layer and a photoprotective layer. The present disclosure further concerns the encapsulated object and a process for the manufacture of the encapsulated object.

## Description

### Field of the invention

The present invention is in the field of recycling of encapsulated objects, in particular solar panels, and relates to a method for delaminating those objects and to the use of specific layers as release promoting layer or as releasable layer in encapsulated objects. The invention further relates to encapsulated objects having such release promoting layers and/or releasable layers.

### Background of the invention

The invention is directed to a recycling process of encapsulated objects such as solar panels comprising a solar cell or an array of solar cells encapsulated. An encapsulant is a transparent layer that forms a protective layer around the solar cells. It has excellent bonding properties and adheres to the glass front sheet and the polymer or glass back sheet of a solar panel. For traditional solar panel lamination, polyolefins such as EVA (poly(ethylene vinyl acetate)), polyolefin elastomer (POE) or thermoplastic polyolefin (TPO) are often used as the encapsulant. Such encapsulants are known, for example from WO2019084773. However, a problem when recycling such solar panels is that it is very difficult to remove the encapsulant from the solar cell surface, and further from the front and back sheets. Hence, recovering the separate components of the solar panel is very difficult.

A number of techniques for improving the recovery during photovoltaic solar cell modules recycling have been proposed in the art. CN110639933 describes an encapsulant in a solar cell that can be dissolved with a stripping solution. US8497140 describes an encapsulant layer for a photovoltaic module enabling recovering and recycling or reusing of a photovoltaic cell by heating. In these documents, the interplay between release encapsulant and the surface is not recognised.

### Summary of the invention

The inventors have developed a way to delaminate an encapsulated object, wherein a coating or encapsulant can be easily removed from the object when it is placed under release conditions, whereas the coating or encapsulant remain stably adhered onto the object under normal operating conditions. The present invention employs a releasable layer as encapsulant and optionally a release promoting layer. This (combination of) layer(s) provides encapsulated objects that are stable (i.e. do not delaminate) during their operative lifetime, and are easily recyclable at the end of their lifetime by subjecting the object to release conditions. The present invention offers an elegant approach to remove coating layers or encapsulants from such objects to facilitate the recycling thereof, while conventional recycling of encapsulated objects often does not separate the main body of the object from the coating layers or encapsulant, or requires much harsher conditions.

The invention can be defined according to the following list of preferred embodiments:
1. Process for delaminating an encapsulated object to be recycled, comprising
   (a) providing an encapsulated object, comprising
      (i) a main body and an outer surface, separated by an encapsulant;
      (ii) the encapsulant that encapsulates at least part of the main body;
      (iii) optionally a release promoting layer positioned between the main body and the encapsulant and/or between the outer surface and the encapsulant;
   (b) contacting the encapsulated object with a releasing liquid at a release temperature in the range of 0 - 150 °C, to obtain a delaminated object and a spent release medium.
2. The process according to embodiment 1, wherein the encapsulated object is selected from solar panels, electronic components, optical devices, laminated components that are used in the automotive industry and glass surfaces, preferably the encapsulated object is a solar panel or a laminated glass window, most preferably the encapsulated object is a solar panel.
3. The process according to embodiment 1 or 2, wherein the surface of the main body and/or the outer surface is selected from a polymeric, glass, ceramic or steel material glass, preferably from glass, silicon oxide, silicon nitride and aluminium oxide, more preferably the encapsulated object is a solar panel and the outer surface is a glass surface and the surface of the main body is selected from silicon oxide, silicon nitride and aluminium oxide.
4. The process according to any one of embodiments 1 - 3, wherein the encapsulant is a polyolefin, which is modified with functional groups that are able to form one or more interactions selected from hydrogen bonds, acid/base interactions, polar interactions or ionic interactions, preferably wherein the functional group is selected from OH, C(O)-alkyl, O-alkyl, ester, carboxylic acid, anhydride, carbamate, ether, imine or amine, more preferably from silanol, acetate, carboxylic acid or maleic anhydride.
5. The process according to any one of embodiments 1 - 4, wherein the encapsulant comprises less than 0.5 wt%, preferably 0 - 0.1 wt%, coupling groups that are capable of forming a covalent bond with the surface of the main body and/or the outer surface.
6. The process according to embodiment 4 or 5, wherein the release promoting layer is absent and surface of the main body and the outer surface is a release promoting surface selected from polysilazanes, glass, metalloid oxides and aluminium oxide.
7. The process according to any one of embodiments 1 - 6, wherein when the release promoting layer is absent, the surface of the main body and the outer surface is a release promoting surface selected from polysilazanes, glass, metalloid oxides and aluminium oxide, and the encapsulant is as defined in embodiment 4 and/or 5.
8. The process according to any one of embodiments 1 - 7, wherein the release promoting layer is present and an oxide, hydroxide or carbonate of a metal or metalloid, which has a solubility in the range of 1 - 100 % in acidic water of pH = 1 and/or alkaline water of pH = 14, preferably a metal oxide, more preferably a layer of zinc oxide, colloidal aluminium oxide, silicon oxide or indium tin oxide, most preferably a layer of zinc oxide.
9. The process according to any one of embodiments 1 - 8, wherein the contacting of step (b) occurs at:
   (A) at a temperature in the range of 35 - 150 °C and a pH in the range of 6.0 - 8.0;
   (B) at a temperature in the range of 15 - 40 °C and a pH in the range of -1.0 - 6.5; or
   (C) at a temperature in the range of 35 - 150 °C and a pH in the range of -1.0 - 6.5.
10. The process according to any one of embodiments 1 - 9, wherein:
   (i) the surface of the main body and the outer surface is selected from glass, silicon oxide and polysilazane, the release promoting layer is absent and the encapsulant is as defined in embodiment 4 or 5, and wherein the contacting of step (b) occurs at a temperature in the range of 0 - 150 °C and the release medium comprises water optionally in combination with an acid, preferably wherein step (b) occurs at conditions (A) as defined in embodiment 9;
   (ii) the release promoting layer is present and selected from silicon oxide and colloidal aluminium oxide, and the encapsulant is as defined in embodiment 4 or 5, and wherein the contacting of step (b) occurs at a temperature in the range of 0 - 150 °C and the release medium comprises water optionally in combination with an acid, preferably wherein step (b) occurs at conditions (A) as defined in embodiment 9;
   (iii) the release promoting layer is present and selected from zinc oxide and indium tin oxide, wherein the release medium comprises an acid and has a pH in the range of -1.0 - 6.5, and wherein the contacting of step (b) occurs at a temperature in the range of 0 - 150 °C, preferably wherein step (b) occurs at conditions (B) as defined in embodiment 9;
   (iv) the release promoting layer is present and selected from fluorine doped tin oxide and aluminium oxide, the encapsulant is as defined in embodiment 4 or 5, and wherein the contacting of step (b) occurs at a temperature in the range of 0 - 150 °C and the release medium comprises an acid and has a pH in the range of -1.0 - 6.5, preferably wherein step (b) occurs at conditions (B) as defined in embodiment 9.
11. The process according to any one of embodiments 1 - 10, which is for recycling of the encapsulated object and wherein the process further comprises:
   (c) separating the encapsulant that is released from the object from the spent release medium;
   (d) recycling the delaminated object from step (b) and/or the separated encapsulant from step (c) in the manufacture of a new version of the encapsulated object.
12. The process according to any one of embodiments 1 - 11, wherein the encapsulated object is shredded as part of step (a) and prior to being subjected to step (b).
13. Use of a release promoting layer for the encapsulation of an object, wherein the release promoting layer is positioned between an encapsulant and the surface of a main body and/or between an encapsulant and an outer surface of the object.
14. The use according to embodiment 13, wherein during delamination of the encapsulated object the release promoting layer is dissolved in a releasing liquid at a release temperature in the range of 0 - 150 °C, to release the encapsulant from the encapsulated object.
15. Use of an encapsulant for the encapsulation of an object, wherein the encapsulant is positioned between a surface of a main body of the object and an outer surface of the object, wherein the encapsulant is as defined in embodiment 4 and/or 5.
16. The use according to embodiment 15, wherein during delamination of the encapsulated object the encapsulant is released from the encapsulated object in a releasing liquid at a release temperature in the range of 0 - 150 °C.
17. An encapsulated object, comprising:
   (i) a main body and an outer surface, separated by an encapsulant;
   (ii) the encapsulant that encapsulates at least part of the main body;
   (iii) optionally a release promoting layer positioned between the main body and the encapsulant and/or between the outer surface and the encapsulant;
   provided that when the release promoting layer is absent, the surface of the main body and the outer surface that is encapsulated is a release promoting surface selected from polysilazanes, glass, metalloid oxides and aluminium oxide, and the encapsulant is as defined in embodiment 4 and/or 5.
18. The encapsulated object according to embodiment 17, wherein the release promoting layer is absent and the encapsulant is as defined in embodiment 4 and/or 5.
19. The encapsulated object according to embodiment 17, wherein the release promoting layer is present and selected from oxides, hydroxides and carbonates of a metal or metalloid, which has a solubility in the range of 1 - 100 % in acidic water of pH = 1 and/or alkaline water of pH = 14, preferably a metal oxide, more preferably a layer of zinc oxide, colloidal aluminium oxide, silicon oxide or indium tin oxide, most preferably a layer of zinc oxide.
20. The encapsulated object according to any one of embodiments 17 - 19, wherein the object is a solar panel having a front outer surface and a rear outer surface, wherein:
   - at the front side, the outer surface is made from glass, wherein the release promoting layer may be present between the main body and the encapsulant, and wherein the encapsulant is as defined in embodiment 4 and/or 5; and
   - at the back side, the outer surface is made from polymer or glass and the surface of the main body is made from aluminium oxide, wherein a release promoting layer is present between the main body and the encapsulant.
21. The encapsulated object according to any one of embodiments 17 - 20, wherein the release promoting layer is a zinc oxide or indium tin oxide layer, and wherein the object further comprises:
   (iv) a photoprotective layer, positioned between the release promoting layer and the encapsulant.
22. A process for the manufacture of an encapsulated object, comprising:
   (1) providing an object to be encapsulated having a main body;
   (2) optionally coating a release promoting layer on at least a part of the surface of the main body;
   (3) optionally coating a release promoting layer on at least a part of an outer surface;
   (4) providing a stack of the main body optionally coated with the release promoting layer, an encapsulant and the outer surface optionally coated with the release promoting layer;
   (5) laminating the stack to form the encapsulated object,
   provided that when steps (2) and (3) are not performed, the surface of the main body and the outer surface that is encapsulated is a release promoting surface selected from polysilazanes, glass, metalloid oxides and aluminium oxide and the encapsulant is as defined in embodiment 4 and/or 5.

### Detailed description

The inventors have developed a way to delaminate an encapsulated object, wherein the encapsulant can be easily removed from the object when it is placed under release conditions, whereas the encapsulant remain stably adhered onto the object under normal operating conditions. The present invention employs a releasable layer and optionally a release promoting layer. This (combination of) layer(s) provides encapsulated objects that are stable (i.e. do not delaminate) during their operative lifetime, and are easily recyclable at the end of their lifetime by subjecting the object to relatively mild release conditions. The present invention offers an elegant approach to remove coating layers or encapsulant from such objects to separate into individual components and facilitate the recycling thereof, while conventional recycling of encapsulated objects often do not separate the main body of the object from the coating layers or encapsulant, or require much harsher conditions.

First and foremost, the inventors have found that specific releasable layers can be employed as encapsulant that provide for easy delamination under release conditions even if no release promoting layer is present. Such easily releasable layers are herein referred to as class A releasable layers. Hence, the invention concerns the use of a class A releasable layer as encapsulant for the encapsulation of an object, wherein the encapsulant is positioned between the outer surface and the main body of the object. In the context of the present aspect, the outer surface and/or the main body of the object is made of glass or any other type of silicon oxide, or a release promoting layer as defined below. Herein, the encapsulant is released from the encapsulated object during delamination in a releasing liquid at a release temperature in the range of 0 - 150 °C.

Secondly, the inventors have found that specific release promoting layers can be employed that provide for easy delamination under release conditions with a wider class of releasable layers as encapsulant. Herein, the release promoting layer is positioned between an encapsulant and the surface of a main body and/or between an encapsulant and an outer surface of the object. This wider class of releasable layers that are easily released when a release promoting layer is used are herein referred to as class B releasable layers. Notably, the class A releasable layers are a sub-set of the class B releasable layers, since class A releasable layers can also be employed in combination with a release promoting layer. Hence, the invention concerns the use of a release promoting layer for the encapsulation of an object, wherein the release promoting layer is positioned between a class B releasable layer as encapsulant and the surface of a main body and/or between an encapsulant and an outer surface of the object. Herein, the release promoting layer may be dissolved in a releasing liquid during delamination at a release temperature in the range of 0 - 150 °C, to release the encapsulant from the encapsulated object.

The invention is further embodied in an encapsulated object, a process for the manufacture of an encapsulated object, a process for delaminating an encapsulated object to be recycled and a process for recycling an encapsulated object. All these aspects of the invention are based upon the findings of the inventors as defined above. Anything defined herein for any of the aspects of the invention, i.e. the encapsulated object, any of the uses and any of the processes according to the invention, applies to all aspects of the present invention.

Without being bound to a theory, the inventors believe that the subtle balance in strength of the bonds between the encapsulant and the outer surface and/or main body of the object is crucial for enabling release. The inventors believe that conventional encapsulants form strong covalent attachment to the surface (e.g. via strong siloxane bonds), which blocks the easy release according to the invention. However, some kind of adhesive interactions between the encapsulant and the surface are required for sufficient stability of the encapsulated object during regular operation. When interactions selected from hydrogen bonds, acid/base interactions, polar interactions and ionic interactions are present, stable operation of the object is possible while allowing easy release according to the invention. In other words, the easy release according to the present invention is made possible by blocking or avoiding reactions that normally occur between the surface (e.g. silanol groups) and adhesion promoting groups present in the encapsulant provided by reactive coupling agents (e.g. silyl ether groups). Breaking non-covalent interactions under release conditions leads to easy release of the encapsulating layer. With the findings of the present invention, it is believed that these non-covalent interactions are weakened or broken during the release step, and therefore the releasable layer is more easily released than for conventional encapsulated objects. Nonetheless, release should not be too easy, as that would give instable encapsulated objects, from which the encapsulating layer may release during regular operation of the object, e.g. by the action of moisture. The inventors found a specific set of applicable encapsulation materials, and optional release promoting layers, enabling an optimal balance between (moisture) stable non-releasing encapsulating layers during regular operation and easy release under relatively mild release conditions.

### The encapsulated object

In one aspect, the invention concerns an encapsulated object. The encapsulated object according to the invention comprises:
(i) a main body and an outer surface, separated by an encapsulant;
(ii) the encapsulant that encapsulates at least part of the main body;
(iii) optionally a release promoting layer positioned between the main body and the encapsulant and/or between the outer surface and the encapsulant.

The encapsulant is a releasable layer that enables release of the outer surface from the main body under release conditions, but not under regular operating conditions. The encapsulant acts as an adhesive layer that keeps the outer surface attached to the main body of the object. In other words, the encapsulant holds the main body and outer surface together. The release promoting layer can be absent if the outer surface is a release promoting surface and the encapsulant is a class A releasable layer. On the other hand, when the release promoting layer is present, the encapsulant is attached to the release promoting layer and is a class B releasable layer. Within this embodiment, any outer surface can be encapsulated. Herein, the encapsulant may also be referred to as the releasable layer or the encapsulating layer. The outer surface, the encapsulant and optionally the release promoting layer(s), and any further layer that may be present, may fully embed the encapsulated object, but objects which are only partly coated or encapsulated are also part of the present invention.

Any object that is normally encapsulated or which is to be encapsulated can be applied in the present invention. The object can be of any shape and any form. In the context of the present invention, the object is typically encapsulated for protection against environmental factors or weather exposure. Thus, the object is typically for outdoor use. Suitable objects include solar panels (or photovoltaic modules), electronic components, such as light-emitting diodes and batteries, optical devices, laminated components that are used in the automotive industry and glass surfaces such as laminated windows. Preferred objects include solar panels and glass windows. Encapsulated or laminated glass windows are commonly used in the automotive industry, construction industry, aerospace and marine industries. In a most preferred embodiment, the object is a solar panel. The preferred objects defined herein are normally recycled, and therefore benefit from the present invention. Thus, in one embodiment, the object is to be recycled at the end of its lifetime.

The object has a main body and an outer surface that serves to cover and protect the main body form environmental factors. The encapsulant is applied between the main body of the object and the outer surface to provide adhesion between those. The main body thus has a surface that is provided with the encapsulant. The surface of the main body and the outer surface, both individually or together also simply referred to as "the surface", can be of any material, such as glass, ceramics, steel, polymeric (e.g. plastic) and the like. The surface of the main body and the outer surface of the object may be of the same or of different material. In the context of a laminated window, both the outer surface and the main body are transparent sheets, typically made of glass or any other suitable polymer, between which the encapsulant is provided. Thus, typically only the front surface of the main body is provided with an encapsulant and outer surface according to the invention when the object is a laminated window. Alternatively, in the context of a solar panel, the main body is a solar cell or an array of solar cells, as commonly applied within a solar panel, and the outer surface is either a glass plate (typically used as front outer surface) or a glass or polymeric back sheet (typically used as rear outer surface). Also considered within the context of the present invention are bifacial solar panels, which are able to capture sunlight on both their front side and their back side, that may be encapsulated according to the invention. In this embodiment, only the front surface, only the rear surface or both may be provided with an encapsulant and outer surface according to the invention.

In a preferred embodiment, the surface is a polymeric, glass, ceramic or steel material, preferably polymeric, glass or ceramic. In case the surface is a ceramic material, it is preferably selected from alumina, titanium dioxide, silicon oxide, silicon carbide, silicon nitride, boron nitride, magnesium oxide, zinc oxide (including aluminium-doped zinc oxide), tin oxide and indium tin oxide, more preferably from alumina, titanium dioxide, silicon oxide, silicon carbide, silicon nitride, indium tin oxide and zinc oxide, even more preferably alumina, titanium dioxide, silicon oxide, silicon carbide or silicon nitride, most preferably silicon oxide or alumina. In case the surface is a polymeric material, it is preferably a polysilazane. Even though any polymeric surface can be subjected to the encapsulation of the present invention, polysilazanes offer unexpected release promoting properties, as further explained below. Similar release promoting properties have been found for glass and other silicon dioxide surfaces. Polysilazanes are conveniently employed as coating to any other surface. Thus, in an especially preferred embodiment, the surface is selected from polysilazane, glass, silicon oxide, silicon nitride and aluminium oxide. The surface of the outer surface, that is laminated onto the main body of the object, is preferably selected from plastic, alumina or glass, most preferably it is glass. The surface of the main body, onto which the encapsulant and outer surface are laminated, is preferably selected from glass or a ceramic material, preferably it is glass, silicon oxide, silicon nitride and aluminium oxide. As will be understood by the skilled person, the surface may contain a combination of different materials, and the coating according to the present invention may be applied to the different materials that make up the outer surface. Likewise, the coating according to the invention may be applied to only part of the surface, wherein the preferred surface materials defined herein apply to the part of the surface that is coated according to the invention.

Solar panels and laminated windows are preferably subject of the present invention. For these applications, it is important that the encapsulant is essentially fully transparent and thus hardly blocks any light, to ensure optimal visibility through the window and optimal light transmission to the solar cells within the solar panel. This also applies to the release promoting layer. The preferred release promoting layers and encapsulant defined herein are transparent and therefore ideally suitable in this respect. Even if the material of the release promoting layer itself would not be fully transparent, the required thickness of the release promoting layer is very low, such that substantially no light is blocked by this layer.

Depending on the exact nature of the object and the intended application, the entire object may be coated according to the invention, or only part thereof. For example, for solar panels only the front may be coated according to the invention, only the back may be coated according to the invention or both the front and the back may be coated according to the invention. Coating only part of an object does not depart from the invention. In one embodiment, 25 - 100 % of the outer surface of the object is coated according to the invention, such as 40 - 100 % or 50 - 100 %, preferably 70 - 100 % of the outer surface, more preferably 80 - 100 % of the outer surface, most preferably about 100 % of the outer surface is coated according to the invention. The part of the outer surface that is coated according to the invention may be coated with the same combination of optional release promoting layer and encapsulant, or with a different combination of optional release promoting layer and encapsulant. For example, a solar panel has a distinctly different front side and back side, wherein the front side may be coated with a class A releasable layer without release promoting layer, and the back side may be coated with a class B releasable layer in the presence of a release promoting layer.

In a preferred embodiment, the object is a solar panel. Solar panels have a front outer surface, typically made from glass, and a back outer surface, also referred to as back sheet and is typically made of glass or a polymeric material (e.g. poly-vinyl fluoride, poly-ethylene terephthalate or poly-amide). Conventional solar panels have on the front side an encapsulant applied on top of the solar cells, and on top of this encapsulant a glass plate is positioned. This layered system of solar cells, encapsulant and glass is then laminated under vacuum at elevated temperature to cure the encapsulant material, during which all components are glued together to form a very stable layered system, which is very hard to take apart. In other words, delamination of the solar panel at the end of its lifetime is hardly possible, and therefore solar panels cannot be taken apart and recycled part by part. Instead, the entire solar panel is normally shredded and valuable metals and other components are typically not extracted. Optionally, the solar panel shreds are incinerated, leaving all inorganic parts including valuable metals as waste that can only be used as a filler material for road construction. A similar encapsulation procedure is applied to the back side, where an encapsulant is placed between the backside of the solar cells and a polymeric back sheet. The present invention makes it possible to separate the glass, encapsulant, solar cells and back sheet to enable more efficient recovering and advantageously subsequent recycling of the separate components.

In the context of the present invention, a solar panel is the most preferred object to be encapsulated. In one embodiment, the front side and/or the back side of the solar panel is encapsulated according to the present invention, preferably the front side and the back side are encapsulated according to the present invention. Preferably, (a) the front outer surface is typically made of glass and the encapsulant is a class A releasable layer or a class B releasable layer in the presence of a release promoting layer, and the rear outer surface is made of a polymeric material and is coated with the release promoting layer and a class B releasable layer on the release promoting layer; or (b) the front outer surface and the rear outer surface are made of glass and are coated with a class A releasable layer or a class B releasable layer in the presence of a release promoting layer. In other words, according to a preferred embodiment, at the front side of the solar panel, the outer surface is made from glass and the surface of the main body (solar cell(s)) is made from silicon dioxide or silicon nitride, wherein a release promoting layer may be present between the main body and the encapsulant if needed, and wherein the encapsulant is a class A releasable layer, and at the rear side of the solar panel, the outer surface is made from polymer or glass and the surface of the main body is made from aluminium oxide, wherein a release promoting layer is present at least between the main body and the encapsulant.

Here below, eleven preferred encapsulated objects (I) - (XI) according to the invention are listed, wherein the object is a solar panel and the main body (MB) is a solar cell or array of solar cells, having a backside outer surface (bOS) and a front side outer surface (fOS). Frontside encapsulation according is labelled with (f1) and further, and backside encapsulation is labelled with (b1) and further. The encapsulated object according to the invention may have front side encapsulation and/or backside encapsulation according to the invention. In one embodiment, the object has at least backside encapsulation according to the invention, which may be combined with conventional frontside encapsulation or frontside encapsulation according to the present invention. Alternatively, the object has at least frontside encapsulation according to the invention, which may be combined with conventional backside encapsulation or backside encapsulation according to the present invention. Especially preferred encapsulated objects according to the invention have both frontside encapsulation according to invention and backside encapsulation according to invention. Although further layers may be present in these objects, it is especially preferred that the objects defined here below consist of the layers mentioned.

In a first preferred embodiment, the object according to the invention is a solar panel having the following layered structure (from back to front), also referred to as object (I):
(bOS) back sheet, typically made from poly-vinyl fluoride, poly-ethylene terephthalate or poly-amide;
(b1) class B releasable layer as encapsulant;
(MB) solar cell or array of solar cells;
(f1) class A releasable layer as encapsulant;
(fOS) glass outer surface.

A solar panel according to this embodiment shows release under release conditions (A), (B) or (C) as defined below, during which the main body will separate from layer (f1) and (fOS). In this embodiment, no release promoting layer is required when the surface of the main body is a release promoting surface as defined below, as class A releasable layers are capable of being released from silicon oxide and glass. A release promoting layer is therefore preferably absent from object (I). This configuration is especially suitable when the front surface of the main body is made of silicon oxide (SiO₂), aluminium oxide, indium tin oxide, (aluminium-doped) zinc oxide or polysilazane, most preferably the front surface of the main body is made of silicon oxide. Release from a front surface made of aluminium oxide, indium tin oxide or (aluminium-doped) zinc oxide typically occurs under the acidic conditions of release conditions (B) or (C), whereas release from a front surface made of silicon oxide or polysilazane may already occur under release conditions (A). Especially for aluminium oxide and indium tin oxide front surface, somewhat harsher acidic conditions were needed, whereas aluminium-doped zinc oxide showed release under weak acidic conditions. Preferred options for these harsher acidic conditions and weak acidic conditions are further defined below in the context of release conditions (B) and (C). Depending on the requirements for the final encapsulated product, the skilled person is capable of matching the optimal release conditions to the specific nature of the front surface. For example, in case release under harsher acidic conditions is not desired, a release promoting layer (f2) can be employed, as in object (II).

In a second preferred embodiment, the object according to the invention is a solar panel having the following layered structure (from back to front) , also referred to as object (II):
(bOS) back sheet, typically made from poly-vinyl fluoride, poly-ethylene terephthalate or poly-amide;
(b1) class B releasable layer as encapsulant;
(MB) solar cell or array of solar cells;
(f1) a release promoting layer;
(f2) an optional photoprotective layer, as defined below;
(f3) class A releasable layer as encapsulant;
(fOS) glass outer surface.

A solar panel according to this embodiment shows release under release conditions (A), (B) or (C) as defined below, during which the main body will separate from layer (f3) and (fOS) by dissolving of layer (f1). This configuration is suitable for any type of front surface of the main body. Class A releasable layers are capable of releasing from glass without the need for a release promoting layer, and from any solar cell surface in view of the release promoting layer (f1).

In a third preferred embodiment, the object according to the invention is a solar panel having the following layered structure (from back to front) , also referred to as object (III):
(bOS) back sheet, typically made from poly-vinyl fluoride, poly-ethylene terephthalate or poly-amide;
(b1) class B releasable layer as encapsulant;
(MB) solar cell or array of solar cells;
(f1) a release promoting layer;
(f2) an optional photoprotective layer, as defined below;
(f3) class B releasable layer as encapsulant;
(f4) an optional photoprotective layer, as defined below;
(f5) a release promoting layer;
(fOS) glass outer surface.

A solar panel according to this embodiment shows release under release conditions (B) or (C) as defined below, during which the main body will separate from layer (f3) and (fOS) by dissolving of layers (f1) and (f5). This configuration is suitable for any type of front surface of the main body, but in particular when the front surface is silicon nitride. In view of the presence of two release promoting layers (f1) and (f5), the releasable layer can be of type B, and easy release is nonetheless accomplished. If needed, a photoprotective layer may be present to protect the solar panel from the photocatalytic properties of the release promoting layer, as further explained below.

In a fourth preferred embodiment, the object according to the invention is a solar panel having the following layered structure (from back to front) , also referred to as object (IV):
(bOS) back sheet, typically made from poly-vinyl fluoride, poly-ethylene terephthalate or poly-amide;
(b1) class B releasable layer as encapsulant;
(b2) an optional photoprotective layer, as defined below;
(b3) a release promoting layer;
(MB) solar cell or array of solar cells;
(f1) class B releasable layer as encapsulant;
(fOS) glass outer surface.

A solar panel according to this embodiment shows release under release conditions (B) or (C) as defined below, during which the main body will separate from layer (b1) and (bOS) by dissolving of layer (b3). This configuration is suitable for any type of back surface of the main body, which typically takes the form of aluminium oxide or may be the same as the front side in a bifacial solar panel. In view of the presence of release promoting layer (b3), the releasable layer can be of type B. If needed, a photoprotective layer may be present to protect the solar panel from the photocatalytic properties of the release promoting layer, as further explained below. Such a photoprotective layer is beneficial at the frontside and backside of the solar panel for both monofacial and bifacial solar panels. Even if the backside would not be transparent to light, photons that enter from the frontside may still cause an undesired photocatalytic event in the absence of a photoprotective layer. In this embodiment, layer (b1) of the encapsulant may not separate from the back sheet (bOS), but since both are polymeric or plastic, this is no big issue for recycling.

In a fifth preferred embodiment, the object according to the invention is a solar panel having the following layered structure (from back to front) , also referred to as object (V):
(bOS) back sheet, typically made from poly-vinyl fluoride, poly-ethylene terephthalate or poly-amide;
(b1) a release promoting layer;
(b2) an optional photoprotective layer, as defined below;
(b3) class B releasable layer as encapsulant;
(b4) an optional photoprotective layer, as defined below;
(b5) a release promoting layer;
(MB) solar cell or array of solar cells;
(f1) class B releasable layer as encapsulant;
(fOS) glass outer surface.

A solar panel according to this embodiment shows release under release conditions (B) or (C) as defined below, during which the main body will separate from layer (b3) and (fOS) by dissolving of (b1) and (b5). This configuration is suitable for any type of back surface of the main body, which typically takes the form of aluminium oxide. In view of the presence of two release promoting layers (b1) and (b5), the releasable layer can be of type B.

Object (VI) has the same configuration as object (I), but with layer (b1) replaced by layers (b1) - (b3) of object (IV). Object (VII) has the same configuration as object (I), but with layer (b1) replaced by layers (b1) - (b5) of object (V). Object (VIII) has the same configuration as object (II), but with layer (b1) replaced by layers (b1) - (b3) of object (IV). Object (IX) has the same configuration as object (II), but with layer (b1) replaced by layers (b1) - (b5) of object (V). Object (X) has the same configuration as object (III), but with layer (b1) replaced by layers (b1) - (b3) of object (IV). Object (XI) has the same configuration as object (III), but with layer (b1) replaced by layers (b1) - (b5) of object (V).

### The encapsulant

The encapsulant is positioned between the main body and the outer surface, and separates the two. The encapsulant ensures that the main body adheres to the outer surface. In the context of the present invention, the encapsulant is a releasable layer, in that it can be released from the main body and/or outer surface under the release conditions defined further below.

The releasable layers in the context of the present invention are divided into a class A releasable layer and a class B releasable layer, wherein the class A releasable layers are fully encompassed within the class B releasable layers. Thus, class A releasable layers do not require the presence of a release promoting layer, but may still benefit from a release promoting layer. In other words, a class A releasable layer does not need to be combined with a release promoting layer, but may be combined therewith. Class A releasable layers, when not combined with a release promoting layer, only reveal release from a limited number of materials, here referred to as release promoting surfaces. Class B releasable layers, except for the subset of class A releasable layers, require the presence of a release promoting layer. Whenever the release promoting layer is present, the releasable layer is attached to the release promoting layer, such that the release promoting layer can promote the release of the releasable layer. Typically, the release promoting layer is sacrificed in the process of delaminating the object, for example by dissolving in the release medium. The release promoting layer may thus also be referred to as a sacrificial layer.

Class A releasable layers have such excellent release properties, that no release promoting layers are needed in case the outer surface is release promoting. Examples of release promoting surfaces are polysilazanes, glass surfaces or any other silicon oxide materials. Also other metalloid oxide materials, such as germanium oxide, and tellurium oxide materials can form a release promoting surface. Thus, in a preferred embodiment, the release promoting surface is selected from glass and any other metalloid oxide materials, most preferably from glass and any other silicon oxide material. For these release promoting surfaces, release is most easily accomplished, i.e. with the mildest conditions using just (hot) water. Release is also possible from aluminium oxide in the absence of a release promoting layer as describe above, but requires somewhat harsher conditions applying acidic media, such as release conditions (B) or (C) defined below. Although this could be seen as less favourable in terms of easy release, yet may be desired when enhanced product reliability with respect to moisture resistance and a stronger adherence within the encapsulated object would be desired. This may for example be the case for solar panels, which are normally to be used in an outdoor environment. Nonetheless, the release promoting surface is preferably selected from glass and any other silicon oxide materials, most preferably it is a glass surface. Surfaces that are not release promoting can be converted in release promoting surfaces by application of a thin coating, for example a polysilazane or silicon oxide coating. In the context of the present invention, such layers are considered part of the release promoting surface, and not of the release promoting layer, as this layer is not dissolved during the release process, in particular step (b), but instead remains part of the surface of the main body or the outer surface. On the contrary, as explained further below, release promoting layers are at least partly dissolved during release, and therefore sacrificial.

Glass and other silicon oxide materials typically have an outer layer with silicon hydroxide groups, and such groups are suitably combined with a class A releasable layer. This also applies to Ge-OH and AI-OH groups. Without being bound to a theory, it is believed that these groups are capable of forming a specific interaction with the class A releasable layer, enabling a reversible binding as further explained below.

Class A releasable layers lack, in contrast to conventional encapsulants, reactive groups that are capable to form covalent bonds with a glass surface. Conventional encapsulants such as EVA and POE are typically functionalized with adhesion promotors, such as silane coupling agents or vinyl-functionalized groups. Common adhesion promotors include trimethyltrivinylcyclotrisilazane (a vinyl coupling agent) and vinyltrimethoxysilane (a silane coupling agent), which may be incorporated in small amounts in the polymeric backbone of POE and EVA. These adhesion promotors introduce reactive groups such as silyl ethers or vinyl groups on the surface of the encapsulant. During encapsulation, these groups react with the Si-OH groups on the glass surface of the object to be encapsulated, creating covalent chemical bonds and forming a very strongly adhering layer of encapsulant on the glass surface. Similar covalent bonds may be formed with the hydroxy groups on the metal or metal oxide surfaces. In the art, it is considered necessary to form such a strong and irreversible bonds between surface and encapsulant. However, the present inventors found that if this interaction is still strong but reversible, the encapsulated object is sufficiently stable for conventional (outdoor) use, while the delamination of the encapsulated object at the end of its lifetime is markedly improved.

Generally, covalent bonding of the class A releasable layer with the surface of the main body, and preferably also with the outer surface, is advantageously avoided. Silane coupling reactions are most commonly employed in conventional encapsulation, but other reactions that form covalent bonds are typically also to be avoided. Such reactions include vinyl reactions (vinyl groups in the encapsulant may react, possibly in the presence of a catalyst or initiator, with several reactive groups on the surface, for example via radical reactions, ionic reactions, thiol-ene reactions or hydrosilylation reactions), epoxy reactions (epoxide groups in the encapsulant may react with amine, carboxylic acid or hydroxyl groups on the surface), isocyanate reactions (isocyanate groups in the encapsulant may react with hydroxyl groups on the surface) and acrylic reactions (acrylate or methacrylate groups in the encapsulant may react with amine or hydroxyl groups on the surface). Such reactive groups that are present in conventional encapsulants are herein collectively referred to as "adhesion promotors" or "coupling groups". These coupling groups typically include at least silyl ether groups and vinyl groups, as those are present in conventional encapsulants such as EVA and POE. Generically speaking, the coupling groups include, typically consist of, silyl ether groups, vinyl groups, epoxide groups, isocyanate groups, acrylate groups and methacrylate groups.

Conventional encapsulants such as EVA and POE are as such not suitable as class A releasable layer, due to irreversible chemical bonding. However, they can be made suitable by deactivating or by omitting the reactive groups introduced by the adhesion promotors. Hydrolysis of silyl ether groups with water (e.g. moisture in ambient air) results in less reactive silanol groups, which are not capable any more of forming a covalent attachment to a glass or other surface. Similarly, deactivating a vinyl group is possible by reaction with water and an acid catalyst, thus forming an hydroxy group. Alternatively or additionally, thermal treatment or curing of the releasable layer deactivates the coupling agents that are responsible for irreversible adhesion promotion. This typically occurs by exposing the releasable layer to conditions that are normally used for encapsulating an object, but in absence of that object. Such thermal treatment was found to be very suitable to convert a conventional encapsulant (e.g. EVA) that showed no release into a class A release encapsulant, as demonstrated in the example section, and the converted encapsulant is referred to as "pre-cured". Generally, a conventional encapsulant which is made suitable to be a class A release encapsulant is referred to as "deactivated", such as deactivated EVA or deactivated POE. These deactivated encapsulants contain substantially no reactive groups that could act as adhesion promotor, as defined below. Deactivated EVA, in particular pre-cured EVA was found to be an excellent class A releasable layer, while conventional (i.e. non-cured) EVA did not show the desirable release properties of the present invention. Similarly, deactivated POE, which has reacted with water, was found to be an excellent class A releasable layer, while conventional (i.e. non-treated) POE did not show the desirable release properties.

A class A releasable layer is distinguished from a conventional encapsulant in that it contains substantially no coupling groups, such as silyl ether or viny groups, that could act as adhesion promotor. Thus, the content of silyl ether or viny groups in the class A releasable layer should be below 0.5 wt%, preferably below 0.1 wt%, such as 0 - 0.05 wt%, based on total weight of the releasable layer. Most preferably, the silyl ether and viny groups are substantially absent from the class A releasable layer. In an especially preferred embodiment, these ranges apply to all coupling groups defined herein. Conventional sources of EVA typically contain 0.5 - 5 wt% of silane adhesion promoter (silyl ether groups), based on total weight of the EVA. The silane reactive group content of those sources can be reduced to the required levels by hydrolysis, aging and/or thermal treatment, as described above. Alternatively, the class A releasable layer, for example EVA, is not functionalized at all with silane coupling agents or other adhesion promotors. As such, the extent of adhesion between the releasable layer and the outer surface of the object is limited to reversible adhesion only, without any irreversible adhesion.

Although it is most preferred not to include any coupling groups in the encapsulant material at all, such that no deactivation step is needed, in case coupling groups are present and need to be deactivated, such deactivation may be accomplished by hydrolysis, aging and/or thermal degradation. The skilled person is capable of determining the optimal method for deactivation depending on the type and nature of the encapsulant and the coupling groups that need to be deactivated. Preferred methods for deactivation are hydrolysis and aging, as thermal degradation may also cause other reactions like crosslinking to occur within the releasable layer, which reactions are then no longer available during the actual lamination step. For example, EVA may form interchain crosslinks during lamination. Although the inventors found that keeping this interchain crosslinking chemistry is not crucial for the formation of stable encapsulated objects, it is still preferred to keep this reactivity and only specifically deactivate the silyl ether coupling groups.

On the other hand, the inventors found that completely removing all adhesion capacity from the encapsulant gives a material that is not suitable for encapsulating an object. Adhesion capacity can be provided to otherwise non-adhering polymers such as polyethylene by introduction of specific functional groups. Examples of functional groups that are suitable in the context of the present invention are silanol, acetate, carboxylate or maleic anhydride. Without any such functional groups, the materials are too easily delaminated from the encapsulated object, such that delamination occurs during normal operation and conventional (outdoor) use is not possible. Thus, where coupling groups such as silyl ether and vinyl groups are preferably absent in the class A releasable layer, other functional groups to provide adhesion with a release promoting surface are preferably present. Without being bound to a theory, it is expected that such functional groups provide some adhesion to the release promoting surface, for example by hydrogen bonds, acid/base interactions, polar interactions or ionic interactions. It is postulated that such interactions, being non-covalent, cause sufficiently strong but reversible adhesion between releasable layer and surface, such that desirable release properties are obtained at the end of the lifetime of the object, while providing a stable encapsulated object during its regular operation.

Thus, in one embodiment, the class A releasable layer comprises functional groups that are able to form one or more interactions selected from hydrogen bonds, acid/base interactions, polar interactions or ionic interactions, preferably hydrogen bonds and/or acid/base interactions. Polar interactions are driven by polarity, i.e. a polar releasable layer adheres better to another polar surface and an apolar releasable layer adheres better to another apolar surface. Acid/base interactions are governed by acidity, i.e. an acidic releasable layer adheres better to a basic surface and a basic releasable layer adheres better to an acidic surface. Ionic interactions are driven by charge differences, i.e. a negatively charged releasable layer adheres better to a positively charged surface and a positively charged releasable layer adheres better to a negatively charged surface. Thus, in a preferred embodiment, the class A releasable layer contains functional groups that are able to form hydrogen bonds and/or create acid/base interactions with the substrate it adheres to. Although the adhesion to glass of the releasable layers is strong under dry conditions, some releasable layers are susceptible to weakening and eventually delamination induced by water or moisture. This indicates a rather weak interaction between the functional groups of the releasable layer and glass, such as those based on hydrogen bonds, are susceptible to being broken by water. In contrast the adhesion to metal oxides, in particular aluminium oxide, is not susceptible to moisture, but requires acidic release medium. This indicates a different nature of the interaction between the releasable layer and metal oxides, possibly based on acid/base interactions. Glass, the preferred surface to be encapsulated, is typically acidic and contains Si-OH groups at the surface that are able to form hydrogen bonds. Hence, in an especially preferred embodiment, the class A releasable layer contains functional groups that are capable of forming hydrogen bonds (e.g. carboxylic acids, esters, silanol groups) and/or basic functional groups (e.g. imines, amines), most preferably functional groups capable of forming hydrogen bonds. In the context of the present preferred embodiment, such functional groups are present in the class A releasable layer, typically as group connected to or part of the polymer chain which forms the releasable layer. Thus, the releasable layer is typically made of a polymer. In one embodiment, the releasable layer consists of the polymer (mixture). This releasable layer may be a single polymer or a mixture of different types of polymers, at least one of which comprises a functional group as defined herein. Suitable mixtures of polymers include a mixture of at least one polymer containing a functional group as defined herein and at least one polymer not comprising such groups. Also possible is a mixture of two or more different polymers each comprising a functional group as defined herein. Further, the releasable layer may contain a co-polymer, prepared from a mixture of monomers, at least one of which contains the functional group as defined herein. Typically, the co-polymer contains one monomer with the appropriate functional group and one or more further monomers. Such a co-polymer may be present in a polymer mixture that forms the releasable layer.

These functional groups typically include at least an oxygen atom and/or a nitrogen atom, Herein the oxygen atom is capable of forming a hydrogen bond, while the nitrogen atom is a basic functionality, capable of forming an interaction with acidic surfaces. The functional group is preferably selected from hydroxyl, C(O)-alkyl, O-alkyl, esters (e.g. OC(O)-alkyl, C(O)O-alkyl), carboxylic acid or carboxylate (COOH or COO⁽⁻⁾), anhydride, carbamate, ether (e.g. PEG), imine (e.g. =NH or =N(alkyl)) or amine (e.g. N(alkyl)₂ or NH(alkyl)). Herein, the alkyl groups are preferably C₁-C₄-alkyl, more preferably C₁-C₂ alkyl, most preferably methyl. Hydroxyl groups (OH) may be directly connected to the polymer chain, or may be connected via a spacer. Especially preferred are silanol groups (OH group connected to a Si atom), which are conveniently formed by deactivating silane coupling agents present in conventional encapsulants such as EVA and POE. Carboxylic acid and carboxylate are used interchangeable and may be in the COOH form or in COO⁽⁻⁾ form. These groups may be attached to the main chain of the polymer of the releasable layer via an optional linker, e.g. a C₁-C₄-alkylene, preferably a C₁-C₂ alkylene, most preferably no linker is present. The anhydride typically has the structure *O-C(O)-OR, where the oxygen atom labelled * is attached to the polymer chain of the releasable layer, optionally via a linker, e.g. a C₁-C₄-alkylene, preferably a C₁-C₂ alkylene, most preferably no linker is present. The R group of the anhydride may be an alkyl chain, such as a C₁-C₄-alkyl, preferably C₁-C₂ alkyl, or may be separately attached to the polymer chain of the releasable layer, optionally via a linker as defined above, as such forming a cyclic structure. Anhydride-grafted polymers, such as maleic anhydride grafted polyethylene or polypropylene are known in the art. In a preferred embodiment, the anhydride is maleic anhydride, wherein the C=C bond is co-polymerized within a polyolefin. Optionally, an anhydride group may be converted in a dicarboxylate group during the manufacturing or during the delamination process. The carbamate typically has the structure *NR-C(O)-OR, where the nitrogen atom labelled * is attached to the polymer chain of the releasable layer, optionally via a linker as defined above, and the R group may be an alkyl chain, such as a C₁-C₄-alkyl, preferably C₁-C₂ alkyl, or may be separately attached to the polymer chain of the releasable layer, optionally via a linker as defined above, as such forming a cyclic structure. The PEG, or polyethylene glycol, typically has the structure (CH₂CH₂O)ₙH, (CH₂CH₂O)ₙCH₃ or (CH₂CH₂O)ₙCH₂CH₃, with n being an integer in the range of 1 - 10, preferably n is 1 or 2. Likewise, the imine or amine functional groups are preferably present as side chain connected to the main chain of the polymer via an optional spacer.

Thus, the class A releasable layer is advantageously a polymer functionalized with a functional group selected from OH, C(O)-alkyl, O-alkyl, ester, carboxylic acid, anhydride, carbamate, ether, imine, or amine. In a preferred embodiment, the functional group is selected from OH, OC(O)-(C₁-C₄)alkyl, butyral (or C₁-C₆ derivatives thereof), carboxylic acid and anhydride, more preferably silanol, acetate, carboxylate or maleic anhydride, most preferably the functional group is silanol or carboxylic acid. Suitable class A releasable layers are typically thermoplastics or elastomers. Polymers suitable for encapsulation may be selected from silicones (including two-component silicone), ionomers, polyolefins and polyurethanes, such as silicones, two-component silicone, ionomers, thermoplastic elastomers (TPE), thermoplastic silicone elastomers (TPSE), thermoplastic polyolefins (TPO), thermoplastic polyurethanes (TPU), polyolefin elastomers (POE). Suitable releasable layers also include multilayered materials like EPE films (an EVA-POE-EVA tri-layered structure). The class A releasable layer is preferably based on polyolefins, which have been functionalized as described herein. Such a functionalized polyolefin is also referred to as modified polyolefin. The modified polyolefin may preferably be a modified polyolefin, a modified polyolefin elastomer or a modified thermoplastic polyolefin. The polyolefin backbone may be a homopolymer or a co-polymer, preferably it is a co-polymer wherein one of the monomers is modified with the functional group as identified above. In one embodiment, the polyolefin backbone is polyethylene, polypropylene or a combination thereof. For example, the modified polyolefin may be a co-polymer of ethylene or propylene, preferably of ethylene, and a modified ethylene, such as vinyl acetate, maleic anhydride, acrylic acid and 3-butenoic acid. Herein, the carboxylic acid groups may be in neutral/acid or in deprotonated salt form. In an especially preferred embodiment, the class A releasable layer is a functionalized polyethylene, such as a co-polymer of ethylene and vinyl acetate, maleic anhydride or acrylic acid, preferably vinyl acetate. Most preferably, the class A releasable layer is poly(ethylene-vinyl acetate).

The use of co-polymers as class A releasable layers is especially advantageous to control the amount of functional groups introduced, which is determined by the ratio of unfunctionalized olefin (e.g. ethylene) and functionalized olefin (e.g. vinyl acetate). Preferably, the amount of functionalized monomer is in the range of 0.5 - 60 wt% of the total weight of the polymer (mixture) or co-polymer, more preferably, the amount of functionalized olefin monomer is in the range of 0.5 - 60 wt% of the total weight of the polymer (mixture) or co-polymer, most preferably of the co-polymer. The skilled person is able to determine the optimal content of the functional group or the modified monomer bearing the functional group, which may vary depending on the exact nature of the polymer and the functional group. Some guidance is provided here. For example, in case the functional group is an anhydride, such as in a maleic anhydride co-polymer, the content thereof can be relatively low, such as 0.01 - 15 wt%, preferably 0.05 - 5 wt% or even 0.2 - 1 wt%. In case the functional group is a carboxylate, such as in a methacrylic acid co-polymer, the content thereof may be somewhat higher, such as 1 - 40 wt%, preferably 5 - 25 wt% or even 8 - 15 wt%. An ester-functionalized olefin may be present at still higher amounts in the co-polymer, which was found to offer excellent adhesion properties. Hence, in a preferred embodiment, the amount of ester-functionalized olefin is in the range of 20 - 50 wt%, more preferably 30 - 45 wt%, of the total weight of the co-polymer. Herein, the weight ranges of the functional group or functionalized monomer refer to the amount of monomer functionalized with the functional group based on total weight of the monomers used to prepare the polymer, polymer mixture or co-polymer.

The presence of functional groups that are able to form hydrogen bonds, acid/base interactions, polar interactions or ionic interactions are crucial for the class A releasable layers. In contrast to the observations for EVA, deactivation of polyethylene does not result in a class A releasable layer. Polyethylene does not contain any of such functional groups, hence deactivated polyethylene does not provide a stable encapsulated object. The inventors observed that a glass outer surface with polyethylene as encapsulant could be delaminated by hand within minutes after the object was laminated, by simply peeling of the layer of polyethylene. On the other hand, a polyethylene based encapsulant modified with one or more of the functional groups mentioned above is suitable as a class A releasable layer.

The inventors found that pre-curing or otherwise deactivating the originally intended adhesion mechanism of the modified polyolefin is needed when coupling agents (in particular silyl ether or vinyl groups) are present. Such deactivation provides a class A releasable layer when it is applied as encapsulant. Modified polyolefins such as poly(ethylene-vinyl acetate) are well-known encapsulants for objects such as solar panels, yet conventionally the poly(ethylene-vinyl acetate) is applied between outside surface and the main body of the object and then cured. Deactivation in the context of the present invention refers to a process wherein the modified polyolefin is subjected to conditions that deactivate the silyl ether or vinyl groups, when the polyolefin is not in contact with the object to be encapsulated. Such deactivation may also be referred to as pre-curing. Pre-curing conditions may vary depending on the specific modified polyolefin, and typically involve the same conditions that would lead to curing of the modified polyolefin. Typically, pre-curing conditions include a temperature in the range of 50 - 250 °C, preferably 100 - 200 °C, and a duration in the range of 1 min - 5 h, preferably 2 min - 1 h. To avoid that during pre-curing the modified polyolefin adheres to a surface, the pre-curing is preferably performed in an inert environment, such as on a surface or between two surfaces of inert material, such as polytetrafluoroethylene (e.g. Teflon or ETFE). Alternatively, the deactivation conditions may involve less severe conditions (lower temperature and/or less deep vacuum), but for an extended period of time. For example, storage for at least 4 weeks at a temperature in the range of 20 - 50 °C and/or in the presence of moisture (e.g. a relative humidity of 30-90% RH) may also lead to deactivation of poly(ethylene-vinyl acetate) in the context of the present invention. The skilled person is able to determine the optimal conditions for deactivation, based on the specific nature of the polymer and the content of silane coupling agents present. The deactivated modified polyolefin is then positioned onto the surface of the object using standard curing conditions. The sheet of class A releasable layer is typically obtainable by or obtained by step (6) as further defined below.

When sheets of modified polyolefin, such as poly(ethylene-vinyl acetate) (EVA), are subjected to curing, the polymer chains cross-link. Cross-linking involves the formation of chemical bonds between the polymer chains, transforming the EVA from a thermoplastic into a thermoset material. This change enhances the desired mechanical and thermal properties of the EVA. Curing is done by placing a sheet of EVA between the main body and the outer surface, and placing the stack of main body, EVA sheet and outer surface in a laminator that applies heat and pressure. The typical temperature range for curing EVA is between 140°C and 160°C. A vacuum is applied to remove any air bubbles that might be trapped between the layers and the press and adhere the stack together. This ensures a uniform and void-free encapsulation of the encapsulated object. When conventional, i.e. non-deactivated, EVA sheets are used as encapsulant, the curing steps ensures that the stack is glued together and the coupling agent forms a covalent molecular bridge between the surface and the encapsulant, such that the layers cannot be separated at a later moment. On the other hand, when the class A releasable layer according to the invention is used as encapsulant, the stack is sufficiently adhered together for stable operation, but delamination of the object after its lifetime, typically during recycling, is greatly facilitated.

Class B releasable layers can be any coating or layer or encapsulant. Surprisingly, any coating layer can be easily released in a process for delaminating the object, for example in the context of a recycling process, if a release promoting layer is present. Any material known in the art to be suitable as encapsulant can be used as class B releasable layer. Typically, thermoplastic polymers such as polyolefins are used as class B releasable layer, which are preferably transparent. In many application, the transmission of light is important, for example for solar panels and laminated glass. Polymers suitable for encapsulation may be selected from silicones (including two-component silicone), ionomers, polyolefins and polyurethanes, such as silicones, two-component silicone, ionomers, thermoplastic elastomers (TPE), thermoplastic silicone elastomers (TPSE), thermoplastic polyolefins (TPO), thermoplastic polyurethanes (TPU), polyolefin elastomers (POE). Suitable releasable layers also include multilayered materials like EPE films (an EVA-POE-EVA tri-layered structure). Preferably, the class B releasable layers include polyolefins, polyolefin elastomers or thermoplastic polyolefins, optionally wherein the polyolefin is modified with a functional group selected from acetate, carboxylate or anhydride. Preferably, the releasable layer is poly(ethylene-vinyl acetate), polyolefin elastomer (POE), polyvinylbutyral (PVB) or thermoplastic polyolefin (TPO).

Poly(ethylene-vinyl acetate) is a well-known encapsulant for solar panels and is a co-polymer of ethylene and vinyl acetate. EVA is typically cured during encapsulation and adheres strongly in view of adhesion promotors present in the EVA. Polyolefin elastomer or POE is a well-known encapsulant for solar panels and is a co-polymer of ethylene and alpha-olefins such as butene, hexene or octene. POE is typically cured during encapsulation and adheres strongly in view of adhesion promotors present in the POE. Thermoplastic polyolefin or TPO is a well-known encapsulant for solar panels and is a mixture of polymers, typically a combination of polypropylene and another polyolefin. Polyvinyl butyral (PVB) is a resin known for its strong binding properties, optical clarity, toughness, and flexibility. It is primarily used as an interlayer in laminated windows or safety glass, such as in automobile windshields and aircraft windows.

Notably, a class B releasable layer can be converted into a class A releasable layer by coating it with a class A releasable layer. Thus, in case a glass outer surface is coated with a conventional encapsulant such as POE, favourable release according to the present invention is not possible. However, when a layer of deactivated EVA, or any other class A releasable layer, is placed between the glass outer surface and the POE encapsulant, the POE will adhere to the deactivated EVA and the EVA to the glass. Upon release according to the present invention, the EVA will release from the glass surface, while the POE and EVA will remain adhered together. Even if recycling of the POE/EVA encapsulant may not be feasible, the recycling of the encapsulated object as a whole still benefits from the present invention by easy release of the encapsulant from the glass outer surface. Of course, the same principles apply for the interface between the encapsulant and the main body of the encapsulated object.

### The release promoting layer

In order to ensure that release between the main body and the encapsulant on one hand, and between the outer surface and the encapsulant on the other hand, is possible, a release promoting layer may be provided between the main body and the encapsulant and/or between the main body and the outer surface. A release promoting layer positioned between the encapsulant and the main body is not needed when the main body's outer surface is made of glass or any other type of silicon oxide and the encapsulant is a class A releasable layer, but is typically needed for any other main body's outer surface, such as aluminium oxide, and if any other encapsulant (class B releasable layer) is applied. Similarly, a release promoting layer positioned between the encapsulant and the outer surface is not needed when the outer surface is made of glass or any other type of silicon oxide and the encapsulant is a class A releasable layer, but is typically needed for any other outer surfaces, such as any plastic material, and any other encapsulant. In case a release promoting layer is present, a releasable layer of class B can be used. In this context, it is noted that metal surfaces typically have an oxide layer as outside layer, this is called a "native oxide layer". Many types of solar cells typically have a back surface of aluminium oxide, possibly as a thin coating of aluminium, at the outside of the solar cell, which is comparable to a native oxide layer on aluminium metal. This layer is normally coated with an encapsulant and back sheet, and can be subjected to the present invention when combined with a class A encapsulant, but then requires either a release promoting layer for release according to the present invention and/or release conditions (C), or combined with a class B encapsulant in combination with a release promoting layer. Such a layer of aluminium oxide present on an aluminium surface is herein referred to as "native aluminium oxide", to distinguish from the colloidal aluminium oxide that is suitable as release promoting layer by simple dissolution in water of this material itself.

Without being bound to a theory, it is believed that the presence of a release promoting layer ensures that the bonds between the encapsulant and the main body and/or outer surface are strong enough for normal operation during the lifetime of the object, but allow for release under mild conditions as defined below. Even if the class B release encapsulant contains adhesion promotors such as silane coupling agents generating irreversible covalent bonding, the strong molecular bond of the releasable layer is not with the surface directly but with the release promoting layer. When the release promoting layer is sacrificed during the release (dissolved in the release liquid or otherwise disintegrated or removed), the releasable layer is released from the outer surface and/or main body of the object. To enable this mechanism, the release promoting layer should dissolve in the release liquid at the release conditions. Herein, "dissolving" may refer to any form of removal of the release promoting layer. For example, calcium carbonate dissolves under the acidic conditions of release conditions (C), while colloidal aluminium oxide does not formally dissolve but the small particles are dispersed into the release liquid already under release conditions (A), forming a suspension. Such dispersion in the liquid also causes release of the releasable layer. The skilled person may determine what release conditions should apply, for example the warm moist conditions of release conditions (A) or the acidic conditions of release conditions (C), and select the appropriate release promoting layer based on the desired release conditions. The skilled person is able to determine the solubility of a candidate release promoting layer in the desired release conditions and based thereon select an appropriate releasable layer.

The release promoting layer can take the form of a metal oxide layer, metal hydroxide layer or metal carbonate layer, wherein the group of metals also includes metalloids, such as silicon oxide. The release promoting layer should be sufficiently soluble to be suitable in this respect. Preferably, the release promoting layer dissolves for 1 - 100 % in acidic water of pH = 1 and/or in basic water of pH = 14, more preferably the solubility is in the range of 5 - 100 %, more preferably in the range of 25 - 100 %. Logically, solubility in acidic water is applicable if acidic release conditions are employed, and solubility in basic water is applicable if basic release conditions are employed. Acidic release conditions are most preferred in the context of the present invention, and therefore the solubility requirement of the suitable release promoting layers is preferably determined at pH = 1. In one embodiment, the release promoting layer is a metal oxide, preferably selected from zinc oxide, colloidal aluminium oxide, magnesium oxide, silicon oxide or indium tin oxide. In another embodiment, the release promoting layer is a metal carbonate, preferably calcium carbonate. In a preferred embodiment, the release promoting layer is selected from a layer of zinc oxide, colloidal aluminium oxide, silicon oxide, indium tin oxide or calcium carbonate, more preferably a layer of colloidal aluminium oxide, silicon oxide or zinc oxide, most more preferably a layer of zinc oxide. The metal oxide that may form the release promoting layer is preferably applied in colloidal form. This is certainly the case for aluminium oxide, as explained below, but also the silicon oxide is preferably in colloidal form when applied as release promoting layer. Such colloidal aluminium oxide and silicon oxide is perfectly suitable for preparing stable objects that are released under the relatively mild conditions as defined further below.

Another surprising aspect of the present invention is the use of colloidal aluminium oxide as release promoting layer. The inventors found that colloidal aluminium oxide particles, when coated on a surface, are water soluble and suitable as release promoting layer, as opposed to native aluminium oxide that may be present on the outer surface of aluminium metal. Such native aluminium oxide does not promote release and requires a release promoting layer, even for class A releasable layers as encapsulant and/or the application of (strong) acids for release, e.g. as in release conditions (C). To be suitable as release promoting layer, the colloidal nature of the aluminium oxide should not be altered by firing or sintering of the aluminium oxide at high temperatures, since this results in formation of an aluminium oxide layer that cannot be dispersed in water and remains a solid layer. Colloidal aluminium oxide is thus typically dried at ambient conditions. Thus, in one embodiment, the release promoting layer is colloidal aluminium oxide. This is especially preferred in case the main body or the outer surface on which the release promoting layer is positioned is made of aluminium oxide. Likewise, in case the material of the main body and/or the outer surface contains silicon, such as a main body with a silicon nitride outer surface, it is preferred that the release promoting layer is silicon oxide. This embodiment advantageously combines the same elements (Si or Al) in the main body and/or outer surface on one hand and the release promoting layer on the other, which in turn minimises the risk of undesired effects caused by surface contamination with incompatible elements, and additionally may facilitate recycling.

Without being bound to a theory, it is believed that the release promoting layer may act sacrificially, in that it at least partly dissolves in the release medium. Such dissolution allows for release medium to penetrate the layer between the encapsulant and the outer surface and/or the main body, finally leading to complete detachment of these layers. The bonds between the release promoting layer and the encapsulant are suitable for release according to the present invention, while the bonds between the surface and the encapsulant are not, except for the specific situation where no release promoting layer is needed, as described elsewhere.

In one embodiment, the release promoting layer is selected from silicon oxide and colloidal aluminium oxide. These provide release under mild conditions, such as release conditions (A) as defined further below. Also, these release promoting layers do not require the use of a photoprotective layer (as defined below), further simplifying the overall design of the object. Yet, these release conditions may be considered too mild in certain situations, in case the object is at risk of moisture ingress potentially leading to undesired premature release. Hence, in an especially preferred embodiment, the release promoting layer is selected from zinc oxide or indium tin oxide. These typically need somewhat harsher release conditions, such as release conditions (B) or even (C), and therefore provide a more stable object during regular operation. As such, ingress of moisture during normal use and operation would not lead to premature release, but release is only achieved as intended under specific conditions, which would never occur during normal use or field operation. Zinc oxide may be preferred over indium tin oxide, as it does not contain a rare element and dissolves already in weak acidic media.

The presence of a release promoting layer does not negatively affect the working of the object. In the context of solar panels or laminated windows, it is noted that the release promoting layer should be sufficiently transparent. Also, the release promoting layer can be very thin, allowing high transparency and such that it hardly has any contribution to the total weight and material costs of the object. Also, the presence of the release promoting layer does not hamper the recycling of the individual components of the object, as most release promoting layers are dissolved or suspended in the release liquid during the release step. Yet, even if the release promoting layer would not be fully sacrificial, its weight based on the total weight of the object is negligibly small and therefore does not hamper recycling. Ideally, the release promoting layer is made of the same elements or very similar materials as the surface of the main body on which it is applied. For example, an aluminium (oxide) surface is preferably coated with colloidal aluminium oxide as release promoting layer. The aluminium oxide release promoting layer is then recycled together with the aluminium (oxide) main body.

The release promoting layer may be as thin as 10 nm, especially in case SiO₂ is used as release promoting layer. Release promoting layers that are completely dissolved may be somewhat thicker, as that is anticipated to help complete dissolution of the layer. Generally speaking, the release promoting layer may have a thickness in the range of 10 nm - 1 mm, such as 10 nm - 10 µm or even 10 nm - 1 µm, preferably in the range of 20 nm - 10 µm, such as 20 nm - 1 µm. In one embodiment, the thickness does not exceed 500 nm, preferably not 250 nm.

### Photoprotective layer

The encapsulated object according to the invention may contain one or more further layers, which help proper functioning of the object and to prevent early failures. For example, the object according to the invention may comprise a photoprotective layer, that avoids photodegradation of the encapsulation layers, or even the entire object. This is particularly relevant in case the object is a solar panel. If present, the photoprotective layer is positioned between the release promoting layer and the encapsulant. Although a photoprotective layer may always be present, such a photoprotective layer is especially preferred in case a release promoting layer of zinc oxide or indium tin oxide is present. Zinc oxide, tin oxide, aluminium doped zinc oxide, fluor doped tin oxide and indium tin oxide are photo-catalytically active and may cause photo-degradation of the encapsulant, which hampers the applicability of the encapsulation according to the invention in solar panels. Thus, in case such a photo-catalytically active layer is present, it is preferably combined with a photoprotective layer.

The inventors found that polymeric encapsulants easily detach from a release promoting layer based on these photo-catalytically active layers when exposed to sunlight, and postulate this may be due to their photocatalytic nature. These oxides may result in oxidative degradation of the bond with the encapsulant, which leads to premature delamination. Hence, a photoprotective layer is preferably positioned between a photo-catalytically active release promoting layer and the encapsulant. Suitable photoprotective layers include aluminium oxide and silicon oxide. For use as photoprotective layer, it is preferred that the aluminium oxide is not in colloidal form, so preferably it is fired or deposited by a vapor deposition technique such as chemical vapor deposition (CVD). Aluminium oxide in colloidal form is already an excellent release promoting layer, so the combination with another release promoting layer such as zinc oxide or indium tin oxide offers no additional benefit. Moreover, zinc oxide or indium tin oxide releasable layers can typically be applied with the intention to enable selective release in acidic media only. Combination with an additional coating which already dissolves in neutral water compromises this intention. Excellent results have been obtained with aluminium oxide as photoprotective layer.

### Release process

In one aspect, the invention concerns a process for the release of an encapsulated object. The process according to the invention comprises:
(a) providing an encapsulated object according to the invention;
(b) contacting the encapsulated object with a release medium at release conditions, to obtain a delaminated object and a spent release medium.

The process according to the invention may also be referred to as being for delaminating an encapsulated object or for removing the encapsulant form the encapsulated object. The process according to the invention may be performed in the context of recycling of the encapsulated object. Herein, it is preferred that the process further comprises:
(c) separating the removed releasable layer; and/or
(d) recycling the delaminated object from step (b) and/or the separated releasable layer from step (c) in the manufacture of a new version of the encapsulated object, or used as deemed fit.

In a preferred embodiment, the process for delaminating an encapsulated object is performed in the context of recycling the object, and the process according to the invention comprises steps (a), (b) and (d), wherein step (d) involves recycling the delaminated object from step (b) in the manufacture of a new version of the encapsulated object.

### Step (a) - Providing the encapsulated object

The encapsulated object that is provided in stap (a) is the encapsulated object according to the invention as defined above, and all preferred embodiments thereof equally apply to step (a) of the process according to the invention.

Step (a) may involve shredding of the encapsulated object prior to it being subjected to step (b). Such shredding improves the contact between release medium and the interface between the object and the encapsulant, such that release of the encapsulant is facilitated. Shredding of objects, such as solar panels and glass windows, is known to the skilled person, and typically performed in the waste treatment and recycling thereof. Even after shredding, the encapsulation according to the inventions offers benefits to the recycling process, as the encapsulant is easily removed from the outer surface and/or main body of the object. Instead of shredding, the object may be cracked or broken prior to step (b), which is especially suitable for glass outer surfaces, and would also improve the contact between release medium and the interface between the object and the encapsulant.

In a preferred embodiment, the object, optionally cracked or broken, is subjected as such to the release of step (b) to remove the outer surface from the encapsulant and the main body. Then, the object from which the outer surface is removed is shredded and subjected again to the release of step (b) in order to remove the encapsulant from the main body of the object, and to retrieve the delaminated object in a two-step release process.

### Step (b) - Release

In step (b), the encapsulated object is contacted with a release medium under release conditions. During step (b), release of the releasable layer from the surface of the object is achieved. Hence, step (b) provides a delaminated object, from which the releasable layer is removed. The delaminated object, which may be in shredded form, is the solid product of step (b). Also obtained in step (b) is a liquid stream, the spent release medium. The releasable layer that is released from the object is typically suspended in or floating on the release medium. After the release of step (b), the releasable layer may also be referred to as the released layer. Advantageously, the releasable layer does not dissolve in the release medium, such that recycling thereof or proper waste treatment thereof is possible. Step (b) typically includes separation of the solid delaminated object and the liquid spent release medium, which is readily accomplished for example by filtration or any other means known in the art. During such separation, the released layer may partly stick to the solids of the delaminated object, which can be resolved by including one or more rinsing steps, wherein the solids are rinsed with water and/or some additional release medium. Such a rinse step may also be beneficial to complete the release process if not yet complete. As such, it is preferred that ultimately the released layer is completely separated from the solids of the delaminated object, which enables proper recycling of the delaminated object.

Two aspects are crucial for proper release during step (b) of the releasable layer from the encapsulated object. The encapsulated object should be contacted with the appropriate release medium and under the appropriate release conditions.

The release medium is a liquid and may also be referred to as release liquid. In line with the object of the present invention, the release medium is aqueous, such that the processes according to the invention are mild and environmentally benign. In other words, the release medium comprises water. In some embodiment, water is sufficient as release medium and no further additives are needed. Herein, the water is of neutral pH, such as in the range of 6.0 - 8.0, preferably in the range of 6.5 - 7.5, most preferably the pH is about 7.0. In other embodiments, the release medium is acidic, such as having a pH in the range of 2.0 - 6.5, preferably in the range of 4.0 - 6.0. Alternatively, the release medium is basic, such as having a pH in the range of 7.5 - 14.0, preferably in the range of 8.0 - 12.0 or even in the range of 8.5 - 10.0. Preferably, the release medium is acidic or neutral, such as in the pH range 2.0 - 8.0, preferably in the pH range 4.0 - 7.5.

Alternatively or additionally, the release medium may comprise organic solvents. Preferably, the content of organic solvent is kept below 80 wt%, such as in the range of 0 - 50 wt% or preferably in the range of 0 - 25 wt% or even 0 - 5 wt% organic solvent. Most preferably, the release medium is fully aqueous, and contains 0 wt% organic solvent. Herein, 0 wt% refers to the absence of organic solvent. If present, organic solvents may be selected from lower alcohols, ethers, ketones, amides, alkanes, carboxylic acids and CO₂ (sc). Herein, "lower" means containing 1-6 carbon atoms (C1-C6), especially C1-C4. The organic solvent is preferably water-miscible or capable of dissolving for at least 10 wt% in water. Examples of suitable organic solvents include methanol, ethanol, propanol, isopropanol, butanol and its isomers, ethylene glycol, propylene glycol, methoxy-ethanol, dimethoxyethane, diethylene glycol, dioxane, acetone, methyl ethyl ketone, tetrahydrofuran, dimethyl formamide, dimethyl acetamide, N-methyl-pyrrolidone, acetonitrile, formic acid, acetic acid, methyl acetate, ethyl acetate, haloalkanes such as dichloromethane, and CO₂ (sc). Preferred organic solvents include ethanol, acetone and ethyl acetate.

Acidic release media further comprise an acid dissolved in the water. Any acid may be used in this respect, including weak and strong acids. In this context, the acid is a Brønsted acid, which is able to donate a hydrogen cation to promote release by breaking the non-covalent interactions with the releasable layer and/or by dissolving the release promoting layer. Suitable acids include hydrochloric acid, sulfuric acid, nitric acid, acetic acid and formic acid. Excellent results have been obtained with hydrochloric acid and acetic acid. The optimal choice depends largely on the desired pH of the release liquid.

Basic release media further comprise a base dissolved in the water. Any base may be used in this respect, including weak and strong bases. In this context, the base is a Brønsted base, which is able to donate a hydroxide anion to promote release by breaking the non-covalent interactions with the releasable layer, and/or by dissolving the release promoting layer. Suitable bases include hydroxides, bicarbonates, such as sodium hydroxide, potassium hydroxide, lithium hydroxide, calcium hydroxide, ammonium hydroxide.

The present invention employs relatively mild release conditions, which contribute to the environmentally benign character of the present invention. Contacting the encapsulated object with release medium, allowing access of the liquid to the relevant interfaces within the object where release is to take place, under the release conditions will cause release of the releasable layer from the object.

Typically, release occurs at a temperature in the range of 0 - 150 °C, such as 10 - 120 °C, preferably 15 - 100 °C or even 20 - 80 °C. In one embodiment, release occurs at ambient temperatures, such as in the range of 15 - 40 °C, preferably 20 - 30 °C. Notably, performing release slightly below ambient temperature offers no additional benefit and may require additional energy to cool the release medium, but this does not deviate from the present invention. Alternatively, release occurs at elevated temperatures, such as in the range of 35 - 150 °C, preferably 50 - 120 °C, more preferably 70 - 110 °C. In one embodiment, the release conditions involve boiling release medium, which is typically in the range of 90 - 120 °C depending on the specific nature of the release medium.

The pressure at which release occurs is not particularly relevant. The present invention offers release at ambient pressure, and deviation therefrom offers no benefit for the release. Yet, performing release above or below ambient pressure is considered part of the present invention. In order to minimize energy consumption and costs, it is preferred that the release conditions involve ambient pressure, such as in the range of 0.9 - 1.1 bar.

The skilled person is capable of determining the optimal duration of the release in step (b). This duration is typically selected to achieve essentially complete release of the releasable layer from the encapsulated object but not significantly longer to avoid unnecessary time and energy spent on step (b). Typically durations may be anything in the range of 30 sec - 10 h, preferably 1 min - 1 h, more preferably 2 - 30 min. Notably, the inventors have shown that the encapsulated object according to the invention can be delaminated in 10 min at release conditions, while conventional encapsulated objects showed no release during 8 h at the same conditions.

In one embodiment, the release medium is neutral water. Herein, it is preferred that care is taken to avoid ingress of moisture into the encapsulated object during its operational lifetime, to prevent a premature release. In case the object is not exposed to moist conditions during operation, such measures may be minimal or even absent. Alternatively, such measures may include application of an appropriate moisture- and gastight sealing material covering and closing all edges of the object, thus preventing ingress of moisture towards all relevant interfaces that have been applied with the encapsulation according to invention and are intended for release upon exposure to water. Such measures avoid undesired release under normal operating conditions in a humid or wet environment, e.g. during rain. The present invention offers encapsulated objects that are stable in moist conditions and show no release under normal operating conditions. Thus, it is preferred that the properties of the releasable layer, the surface and/or the release promoting layer are chosen in such a way that these are not susceptible to neutral water considering adhesion or release, but require the release medium to be either acidic or basic, and/or the release temperature is elevated. In one embodiment, the release medium is acidic or basic, and the release temperature is ambient. In an alternative embodiment, the release medium is acidic or basic, and the release temperature is elevated. In an alternative embodiment, the release medium is neutral, and the release temperature is elevated. Herein, when the release medium is acidic or basic, it is preferred that the release medium is acidic.

Thus, first preferred release conditions, herein also referred to as release conditions (A), include an elevated temperature in the range of 35 - 150 °C, preferably 50 - 120 °C, more preferably 70 - 110 °C. Preferably, release is performed at or near the boiling point of the release medium. In the context of release conditions (A), it is preferred that the medium is neutral, although slightly acid or slightly basic conditions are also suitable. Thus, preferably, the pH is in the range of 6.0 - 8.0, preferably in the range of 6.5 - 7.5, most preferably the pH is about 7.0. Most preferably for release conditions (A), the release medium is water.

Likewise, second preferred release conditions, herein also referred to as release conditions (B), include an ambient temperature in the range of 15 - 40 °C, preferably 20 - 30 °C. Preferably, release is performed at or near room temperature. In the context of release conditions (B), the medium is acidic or basic, preferably acidic. Thus, preferably, the pH is in the range of -1.0 - 6.5, more preferably in the range of 0.0 - 4.0, most preferably in the range of 1.0 - 3.0. In some embodiments, somewhat harsher acidic conditions are needed, such as a pH in the range of -1.0 - 2.0, preferably in the range of -0.5 - 1.0. In other embodiments, somewhat milder conditions, also referred to as weak acidic conditions, are sufficient for proper release, such as a pH in the range of 2.0 - 6.0, preferably in the range of 2.5 - 4.5. Most preferably for release conditions (B), the release medium is water comprising an acid as defined above.

Likewise, third preferred release conditions, herein also referred to as release conditions (C), include an elevated temperature in the range of 35 - 150 °C, preferably 50 - 120 °C, more preferably 70 - 110 °C. Preferably, release is performed at or near the boiling point of the release medium. In the context of release conditions (C), the medium is acidic or basic, preferably acidic. Thus, preferably, the pH is in the range of -1.0 - 6.5, more preferably in the range of 0.0 - 4.0, most preferably in the range of 1.0 - 3.0. Similar to release conditions (B), some embodiments may benefit from somewhat harsher conditions, while other embodiments from somewhat milder conditions. In this respect, the preferred pH ranges as for release conditions (B) also apply to release conditions (C). Most preferably for release conditions (C), the release medium is water comprising an acid as defined above.

The encapsulated objects according to the present invention are easily delaminated with at least one of release conditions (A), (B) and (C). Preferably, release is accomplished by release conditions of (A) or (B), most preferably by release conditions (B). Even though the objects according to the invention can be operated in the outdoor environment without jeopardizing their stability, the chosen releasable layer and/or release promoting coating combined with release conditions (A) may in some instances provide some risk considering stability in certain situations, e.g. if moisture is able to ingress into the object a premature release may occur during operation. Most often, release conditions (B) are sufficient for proper release of the releasable layer, yet in certain cases release conditions (C) may be used, which are slightly more severe. However, in most cases, release conditions (B) are sufficient to accomplish proper and full release according to the invention. The skilled person is able to determine the optimal release conditions, based on the specific object and operational environment.

In case there is no release promoting layer, but a class A releasable layer is used as encapsulant, the release typically employs release conditions (A) or (B), preferably (A). In case the release promoting layer is silicon oxide or colloidal aluminium oxide, the release typically employs release conditions (A) or (B), preferably (A). In these two situations, the relative mild conditions of release conditions (A) are sufficient to achieve proper release, yet using somewhat harsher conditions such as release conditions (B) or (C) can also be used as those will also lead to release. Alternatively, for some release promoting surfaces, such as native aluminium oxide, release conditions (C) may be needed for proper release. In case the release promoting layer is zinc oxide or indium tin oxide, the release typically employs release conditions (B) or (C), preferably (C). This holds for all class B encapsulants, including the class A encapsulants. For this embodiment, typically somewhat harsher conditions, as in release conditions (B) or even (C) are needed to achieve proper release.

Four especially preferred release scenarios for specific objects according to the invention are as follows:
(i) the surface of the main body and the outer surface is selected from glass, silicon oxide and polysilazane, the release promoting layer is absent and the encapsulant is a class A releasable layer, and wherein the contacting of step (b) occurs at a temperature in the range of 0 - 150 °C and the release medium comprises water optionally in combination with an acid.
(ii) the release promoting layer is present and selected from silicon oxide and colloidal aluminium oxide, and the encapsulant is as defined in claim 4 or 5, and wherein the contacting of step (b) occurs at a temperature in the range of 0 - 150 °C and the release medium comprises water optionally in combination with an acid;
(iii) the release promoting layer is present and selected from zinc oxide and indium tin oxide, wherein the release medium comprises an acid and has a pH in the range of -1.0 - 6.5, and wherein the contacting of step (b) occurs at a temperature in the range of 0 - 150 °C;
(iv) the release promoting layer is present and selected from fluorine doped tin oxide and aluminium oxide, the encapsulant is as defined in claim 4 or 5, and wherein the contacting of step (b) occurs at a temperature in the range of 0 - 150 °C and the release medium comprises an acid and has a pH in the range of -1.0 - 6.5.

### Step (c) - Separating the removed releasable layer

In a preferred embodiment, the releasable layer that is removed or released from the object is separated or isolated from the spent release medium or from the rinse liquid used to rinse the delaminated object. As the released layer is typically suspended therein, it is easily removed for example by filtration, centrifugation, sedimentation or evaporation of the liquid. Preferably, separation of the released layer in step (c) is done by filtration of centrifugation, most preferably by filtration. Such means to separate the solids and the liquid of a suspension are well-known to the skilled person. Suitably, ultrafiltration may be used to remove the small particles of released layer, which is particularly preferred in case step (a) involves shredding of the object.

After being removed from the spent release medium, the released layer may be rinsed and dried. Step (c) provides a released layer, that may be further used in step (d) or otherwise used as deemed fit. Step (c) further provides spent release medium from which the releasable layer is removed. This medium is herein also referred to as a cleansed release medium. Such cleansed release medium is substantially identical to the release medium that is used in step (b). Any acid or base present in the release medium may act catalytically to disrupt non-covalent interactions that exist between the encapsulant and the surface(s), but is typically not consumed during step (b). Therefore, it is preferred that the cleansed release medium is reused as release medium in another occurrence of step (b), optionally after supplementation of a small amount of acid or base if needed. Such reuse of the release medium further enhances the efficiency as well as the environmental friendliness of the process according to the invention.

In case a release promoting layer is used, this layer may end up in the spent release medium in dissolved form. In one embodiment, valuable metals are extracted from the spent release medium, which is especially preferred for indium in case indium tin oxide is used as release promoting layer.

The released layer that is separated in step (c) can be used as deemed fit. Typically, it is discarded as waste or recycled in its own manner. As the released layer is typically a plastic and the steps of the present process obtain the layer free from any contaminations, it is readily subject to conventional plastic recycling steps.

### Step (d) - Further use of the delaminated object

In a preferred embodiment, the delaminated object from step (b) and/or the separated releasable layer from step (c) is further used in step (d), in the manufacture of a new version of the encapsulated object, or any other suitable application. Advantageously, at least the delaminated object from step (b) is further used as deemed fit, preferably for the recycling of the delaminated object or any other suitable application. In case step (d) involves the further use of the delaminated object from step (b), step (c) does not necessarily need to be performed.

In a preferred embodiment, the delaminated object that is obtained in step (b) is recycled, i.e. used in the manufacture of a new version of the encapsulated object. Such recycling of encapsulated objects, for example in the context of solar panel recycling, is already known, but is improved with the process according to the invention, as no more encapsulant is part of the object to be recycled and the object is separated into its individual components, which makes recycling thereof easier.

Recycling of the delaminated object typically involves extraction of valuable metals, and optionally other materials from the optionally shredded object. For example when the object is a solar panel, silicon is typically recovered via a series of chemical and thermal processes to remove impurities. Also aluminium, copper, and silver can be extracted and re-used as deemed fit. Plastics and further non-recyclable materials can be discarded as waste.

### Manufacture process

In a further aspect, the invention concerns a process for the manufacture of an encapsulated object. The process according to this aspect of the invention comprises:
(1) providing an object to be encapsulated having a main body;
(2) optionally coating a release promoting layer on at least a part of the surface of the main body;
(3) optionally coating a release promoting layer on at least a part of an outer surface;
(4) providing a stack of the main body optionally coated with the release promoting layer, an encapsulant and the outer surface optionally coated with the release promoting layer;
(5) laminating the stack to form the encapsulated object.

Herein, when steps (2) and (3) are not performed, the surface of the main body and the outer surface that is encapsulated is a release promoting surface and the encapsulant is a class A releasable layer.

Typically, the process according to the present aspect is for the manufacture of the encapsulated object according to the invention as defined above. The manufacturing process according to the invention is perfectly compatible with existing processes for manufacturing encapsulated objects such as solar panels. Such processes involve a step wherein the main body of the object is coated with a coating layer or encapsulant. With respect to such conventional manufacturing, the process according to the invention only employs a different encapsulant, i.e. the releasable layer, and/or (an) intermediate coating step(s) to apply the release promoting layer(s). As such, the present invention is perfectly compatible with existing manufacturing processes and can easily be implemented therein, in order to make recycling of the object more practical and efficient.

### Step (1) - Providing the object to be encapsulated

As defined above, the object can be any object for which coating or encapsulation is desired. The object to be encapsulated comprises a main body which has a surface. The object and its surface, including preferred embodiments, are defined above. In one especially preferred embodiment, the main body is a solar cell or an array of solar cells that is to be encapsulated. In the context of this embodiment, the surface is typically a silicon oxide, silicon nitride surface, an aluminium oxide, an indium tin oxide or a(n) (aluminium doped) zinc oxide surface.

### Step (2) - Coating of the release promoting layer on the main body

In step (2), at least a part of the surface of the main body of the object is coated with the release promoting layer, as defined above. Step (2) is optional and only needs to be performed in case a release promoting layer is to be applied. In case the encapsulant is a class B releasable layer and not a class A releasable layer, step (2) should be performed and a release promoting layer is applied on the surface of the main body of the object. On the other hand, if the encapsulant is a class A releasable layer and the surface of the main body is made of glass or silicon oxide, a release promoting layer is not needed and step (2) does not need to be applied. Normally, if step (2) is performed, one would apply the release promoting layer on the entire to be coated surface of the main body, but deviation thereof does not deviate from the inventive merit of the present invention. Even if the release promoting layer would cover a smaller or a larger area of the to be coated surface of the main body, delamination of the object will still be facilitated.

Coating of an object with the release promoting layer as defined herein is known in the art, and can be performed in any suitable way. For example, a thin layer of the release promoting layer can be deposited onto the surface by chemical vapor deposition (CVD), physical vapor deposition (e.g. sputtering), atomic layer deposition (ALD), pulsed layer deposition (PLD), electrodeposition and wet chemical methods, such as spraying or sol-gel application with subsequent removal of the liquid (drying). The skilled person is able to select the best suited method depending on the specific nature of the release promoting layer. For example, metal oxides such as ZnO can be readily applied by pulsed layer deposition (PLD). Importantly, in case the release promoting layer is colloidal aluminium oxide, care should be taken not to disrupt the colloidal nature. Therefore, it is preferred that the aluminium oxide is deposited onto the surface and only dried, but not fired or sintered.

### Step (3) - Coating of the release promoting layer on the outer surface

Much like step (2), step (3) is an optional step which only needs to be performed in case a release promoting layer is to be applied. In case the encapsulant is a class B releasable layer and not a class A releasable layer, step (3) should be performed and a release promoting layer is applied on the outer surface. On the other hand, if the encapsulant is a class A releasable layer and the outer surface is made of glass or silicon oxide, a release promoting layer is not needed and step (3) does not need to be applied. Further, step (3) does not need to be performed in case separation of the encapsulant and the outer surface is not needed, for example when both are made of plastic.

Step (3) can be performed in the same way as described for step (2).

### Step (4) and (5) - Providing and laminating a stack

Steps (4) and (5) correspond to the conventional way of preparing an encapsulated object, wherein the main body, optionally coated with the release promoting layer, the encapsulant and the outer surface, optionally coated with the release promoting layer, are stacked in the appropriate order and then subjected to lamination. The stack may contain further layers, such a second layer of encapsulant and a back sheet. The skilled person is able to assemble the layers of the stack in the correct order, and to laminate those. These steps can be performed in any way known in the art.

The lamination of step (5) typically occurs in a laminator, which applies heat and pressure. The typical temperature range for curing is between 50 °C and 200 °C. During lamination, a vacuum is typically applied to remove any air bubbles that might be trapped between the layers. This causes the encapsulant to melt and flow to some extent, and adhere to the main body and the outer surface, tightly bonding the layers together. The stack is then cooled to solidify the releasable layer, and thus forming a protective and durable encapsulant around the object. The encapsulant protects the object from moisture, dust, mechanical damage and increases the longevity of the object. The object may then be placed in a frame for additional structural support, which is typically done for solar panels and laminated windows.

### Step (6) - Deactivating the encapsulant

In a preferred embodiment, steps (2) and (3) are not performed and the releasable layer is a class A releasable layer. If needed, coupling groups such as silyl ether or vinyl groups may be deactivated prior to step (4). Hence, in a preferred embodiment the process according to the present aspect includes a step (6) of deactivating the encapsulant in case a class A releasable layer is desired and steps (2) and (3) are not performed.

In step (6), a deactivated modified polyolefin is provided, which will form the class A releasable layer. In one embodiment, step (6) involves the actual pre-curing step, wherein the sheet of modified polyolefin is pre-cured. Pre-curing according to the present invention refers to a process wherein the modified polyolefin is subjected to pre-curing conditions when not in contact with the object or outer surface to be encapsulated. Pre-curing conditions may vary depending on the specific modified polyolefin, and typically involve the same conditions that would lead to curing of the modified polyolefin. Typically, pre-curing conditions include a temperature in the range of 50 - 250 °C, preferably 100 - 200 °C, and a duration in the range of 1 min - 5 h, preferably 2 min - 1 h. Additionally, the pressure may be reduced during pre-curing, such as 0.01 - 500 mbar(a), preferably 0.1 - 100 mbar(a). To avoid that during pre-curing the modified polyolefin adheres to a surface, the pre-curing is preferably performed in an inert environment, such is on a surface or between two surfaces of inert material. Typically, two parallel-positioned sheets of inert material are used, between which the sheet of modified polyolefin is pre-cured. A suitable inert material is for example polytetrafluoroethylene (PTFE or Teflon) or ethylenetrafluorethylene (ETFE). Alternatively, the deactivation may involve less severe conditions (lower temperature and/or less deep vacuum), but for an extended period of time and/or in the presence of sufficient moisture to react with the silyl ether or vinyl coupling groups, resulting in their deactivation. For example, storage for at least 4 weeks at a temperature in the range of 20 - 50 °C and a relative humidity above 90 %RH may lead to deactivation of coupling agents contained in poly(ethylene-vinyl acetate) or polyolefin elastomers.

The pre-curing of step (6) affords deactivated modified polyolefin, which is not connected to the object to be laminated. A sheet of deactivated modified polyolefin is then used as encapsulant in step (4).

### Optional further steps

The manufacturing process according to the invention may contain further steps. In one embodiment, a photoprotective layer is coated on top of one or both of the release promoting layer(s). If performed, this additional coating step is performed after step (2) and/or (3), and in step (4) the main body and/or outer surface comprising the photoprotective layer is used in the stack. Photoprotective coatings are known in the art, and can be applied by any suitable means. Further details on when the application of a photoprotective layer is desired are provided above.

### Examples

The invention is illustrated by the following examples.

### Sourcing and preparation of thin films and encapsulation materials

A colloidal SiO₂ (silicon dioxide or silica) solution was prepared by hydrolysis of the organic precursor tetraethylorthosilicate (TEOS) based on a method as reported in Shuang Cai et al., ACS Appl. Mater. Interfaces (2014), 6, 14, 11470-11475. 2.08 g TEOS was mixed with 22.6 g isopropanol and 0.66 g dilute hydrochloric acid (9.71 % in water) and left to stand for at least 2 h.: Thin SiO₂ films were prepared by deposition of this solution onto a substrate (glass or aluminium foil) and any excess solution was allowed to drop off by keeping the sample in a vertical position. After drying the samples were heated at 150 °C for 10 minutes.

Polysilazane coatings on glass were prepared by deposition of a commercially available precursor solution (Solar Sharc) followed by drying at room temperature for at least one week.

Thin aluminium oxide (Al₂O₃) films were prepared on glass plates by depositing a few droplets from an 20 % aqueous colloidal Al₂O₃ solution (ThermoFisher Scientific) onto the glass plate, and the solution was spread with a tissue. The coating was then dried at room temperature.

Zinc oxide (ZnO) was deposited as a thin film by pulsed layer deposition (PLD) onto silicon wafer substrates.

Indium Tin Oxide (ITO) coated glass has been obtained from Philips Engineering Solutions / MEMS & Micro Devices, and Fluorine doped Tin Oxide (FTO) coated glass has been obtained from Pilkington, and both are used as such.

Thin films of Bynel 4164 (a maleic anhydride modified polyolefin) and Surlyn 1702 (a co-polymer of ethylene and methacrylic acid, which is partially deprotonated) (Dyenamo) were used as encapsulation materials for the demonstration of release properties. Conventional encapsulates EVA (First) and TPO (Satinal) were used as received, as examples of classical encapsulants without any intrinsic release properties.

Pre-cured EVA was prepared by pre-curing the material at 150 °C for 10 minutes between two foils of ETFE, to prevent adhesion of the EVA and to enable preparation of a cured freestanding (non-coated) EVA film. Below, this encapsulant is referred to as "pre-cured EVA" or "cured EVA". Separate batches of EVA (First) and POE (Yparex) were exposed to water or a moist environment for a prolonged time without heating.

### Lamination of encapsulants onto substrates

The encapsulants were laminated onto a substrate at 150 °C on a hot plate covered with ETFE foil during 10 minutes. The encapsulant was placed on the ETFE foil and the substrate was pressed onto the encapsulant to glue both firmly together. The substrate was a bare glass plate or a glass plate coated with one of the coatings described. Aluminium foil was also used as a substrate, serving as a model for an Al₂O₃ coated surface as is typical for a solar cell rear side coating. The aluminium foil was used either as received or coated with SiO₂. Typical substrate sizes of 5-10 cm² were used.

### Stability tests

The laminated samples of FTO coated glass or aluminium foil, coated with Bynel, Surlyn or EVA (as received, not pre-cured), were exposed to sunny outdoor conditions for at least 2 days and further until failure, that is when the encapsulant could be peeled off, if that happened within 3 months. Of the samples based on FTO coated glass one sample has been placed with the substrate glass-side facing the sky and one sample with the encapsulant facing the sky. Samples on aluminium foil have been oriented with the encapsulant facing the sky. The orientation of the samples did not lead to a difference in behaviour. The results of the stability tests are summarized in Table X below.

### Release tests

Release experiments were carried out by immersion of the laminated sample into water or acidified water as release medium, at either ambient temperature or boiling. Water was acidified with either a weak acid (dilute acetic acid, pH about 2-3) or a strong acid (concentrated HCl, pH about 1). The sample was kept in the release medium for at least 5 min, up to 8 h. The results of the release tests are summarized in Table 1 below.

### Results and observations

**Table 1: Stability and release results**

| **Substrate** | **Release promoting layer** | **Encapsula nt** | **Stability test** | | **Release test** | |
|---|---|---|---|---|---|---|
| | | | *Duration* | *Stable?* | *Conditions* | *Result* |
| glass | none | Bynel | | | 5-10 min in boiling water | Release |
| glass | none | Surlyn | | | | Release |
| glass | none | cured EVA | | | | Release |
| glass | polysilazane | Bynel | | | | Release |
| glass | polysilazane | Surlyn | | | | Release |
| glass | polysilazane | cured EVA | | | | Release |
| glass | none | EVA | | | 8 h in boiling water | No release |
| glass | none | TPO | | | | No release |
| Al foil | none | Bynel | 3 month | Yes | | No release |
| Al foil | none | Surlyn | 3 month | Yes | | No release |
| Al foil | none | cured EVA | | | | No release |
| glass | ITO | Bynel | | | | No release |
| | | | | | 10 min in boiling conc. HCl | Release (ITO dissolved) |
| glass | ITO | Surlyn | | | 8 h in boiling water | No release |
| glass | ITO | cured EVA | | | | No release |
| FTO-glass | none | Bynel | 2 week | No | | No release |
| | | | | | 10 min in boiling conc. HCl | Release |
| FTO-glass | none | Surlyn | 2 day | No | 8 h in boiling water | No release |
| FTO-glass | none | cured EVA | 2 week | No | | No release |
| FTO-glass | none | EVA | 2 week | No | | No release expected |
| silicon wafer | ZnO | Bynel | | | | No release |
| silicon wafer | ZnO | Surlyn | | | | No release |
| silicon wafer | ZnO | TPO | | | | No release expected |
| | | | | | 2 d in dilute acetic acid (rt) | Release (ZnO dissolved) |
| Al foil | silica | Bynel | 3 month | Yes | 5-10 min in boiling water | Release |
| Al foil | silica | Surlyn | 3 month | Yes | | Release |
| Al foil | silica | cured EVA | | | | Release |
| FTO-glass | silica | Bynel | | | | Release |
| FTO-glass | silica | Surlyn | | | | Release |
| FTO-glass | silica | cured EVA | | | | Release |
| glass | alumina | TPO | | | | Release |

The results in Table 1 show that Bynel, Surlyn and pre-cured EVA laminated onto glass or glass coated with polysilazane revealed an easy release from the substrate within 5 to 10 minutes in boiling water, indicating that Bynel, Surlyn and pre-cured EVA are class A releasable layers that do not require a release promoting layer if coated onto a release promoting surface such as glass. Also, the presence of release promoting layer polysilazane did not affect the release properties, indicating that class A releasable layers can also be used in combination with a release promoting layer. Similar release properties as for pre-cured EVA could be induced into EVA by exposure to water or a moist environment for a prolonged time without heating, prior to lamination (data not shown).

Bynel, Surlyn and pre-cured EVA laminated onto aluminium foil (native aluminium oxide layer) or glass coated with ITO or FTO did not reveal a release in boiling water, even not after 8 hours. However, the glass sample coated with ITO and Bynel showed release in boiling concentrated HCl in 10 minutes, during which the ITO dissolved, indicating that ITO can serve as release promoting layer but requires somewhat harsher conditions for release. FTO is not a release promoting layer, but rather it blocks release from the otherwise non-blocking glass surface. Hence, where glass is a non-blocking surface that can be encapsulated with a class A releasable layer without release promoting layer, this is not possible for FTO-coated glass.

ZnO deposited by PLD on silicon wafer in combination with Bynel or Surlyn showed no release in 8 h boiling water. However, a TPO encapsulant on ZnO-coated silicon wafer did show release in dilute acetic acid (pH about 3) for 2 days at room temperature, by dissolving the ZnO layer.

Standard (as received, i.e. not pre-cured) EVA or TPO laminated onto glass did not reveal a release in boiling water, not even after 8 hours, indicating that EVA and TPO are not suitable as class A releasable layers, even if coated onto a surface like glass.

Bynel, Surlyn and pre-cured EVA applied as encapsulation material reveal properties differing from classical encapsulants used, such as EVA, POE and TPO. The property of interest concerns the detachment or release of the encapsulation material from substrate glass upon exposure to (hot) water. Further investigations involving other substrate materials, typically several (mixed) metal oxides such as Al₂O₃, ZnO, ITO and FTO, did not result in this release. This leads to the conclusion that the release observed upon exposure to water seems to be specific for glass and/or SiO₂ and could be based on hydrolysis of the chemical bond between the encapsulant and SiO₂. However, although laminates based on the oxides of e.g. aluminium or zinc revealed apparently a strong non-hydrolysable bond between the encapsulant and the substrate, acidic media have been shown to be capable of initiating the release process either with or without dissolution of the metal oxide involved. The relatively strong bond between encapsulant and metal oxide can be broken by interaction with acidic media, also if the metal oxide itself is not dissolved by the acid.

The specific properties of these release encapsulants enable easy separation of the components that are held together by these encapsulants. This applies to glass but also to other kinds of components coated with SiO₂. Instead of applying specific release encapsulants, alternatively coatings such as ZnO, ITO or Al₂O₃ can be applied as another release promoting layer in combination with classical encapsulants to result in a similar release properties, but in this case driven by dissolution of the metal oxide itself in acidic media or in water. A surprisingly well suitable release encapsulant is pre-cured EVA, which is able to serve the same purpose and has the strong advantage of having properties most close to an encapsulation material which is widely accepted by the PV industry (EVA). All beneficial properties of EVA as encapsulant are maintained, and at the same time improved release properties are introduced into the material by pre-curing EVA before applying it as encapsulant.

Application of any encapsulant on some of the coatings proposed, i.e. ZnO and ITO, bears the risk of premature detachment of the encapsulant from the coated surface under illumination (sunlight) conditions, probably due to undesired photochemical degradation of the chemical bonds between the substrate and the encapsulant. Covering the photochemically active coating, i.e. ZnO or ITO, with a non-photochemically active coating, a photoprotective layer, such as SiO₂ or Al₂O₃, could solve this problem.

## Claims

1. Process for delaminating an encapsulated object to be recycled, comprising
(a) providing an encapsulated object, comprising
(i) a main body and an outer surface, separated by an encapsulant;
(ii) the encapsulant that encapsulates at least part of the main body;
(iii) optionally a release promoting layer positioned between the main body and the encapsulant and/or between the outer surface and the encapsulant;
(b) contacting the encapsulated object with a releasing liquid at a release temperature in the range of 0 - 150 °C, to obtain a delaminated object and a spent release medium.

2. The process according to claim 1, wherein the encapsulated object is selected from solar panels, electronic components, optical devices, laminated components that are used in the automotive industry and glass surfaces, preferably the encapsulated object is a solar panel or a laminated glass window, most preferably the encapsulated object is a solar panel; and/or
wherein the surface of the main body and/or the outer surface is selected from a polymeric, glass, ceramic or steel material glass, preferably from glass, silicon oxide, silicon nitride and aluminium oxide,
most preferably wherein the encapsulated object is a solar panel and the outer surface is a glass surface and the surface of the main body is selected from silicon oxide, silicon nitride and aluminium oxide; and/or

3. The process according to any one of claims 1 - 2, wherein the encapsulant is a polyolefin, which is modified with functional groups that are able to form one or more interactions selected from hydrogen bonds, acid/base interactions, polar interactions or ionic interactions, preferably wherein the functional group is selected from OH, C(O)-alkyl, O-alkyl, ester, carboxylic acid, anhydride, carbamate, ether, imine or amine, more preferably from silanol, acetate, carboxylic acid or maleic anhydride, more preferably wherein the release promoting layer is absent and surface of the main body and the outer surface is a release promoting surface selected from polysilazanes, glass, metalloid oxides and aluminium oxide.

4. The process according to any one of claims 1 - 3, wherein the encapsulant comprises less than 0.5 wt%, preferably 0 - 0.1 wt%, coupling groups that are capable of forming a covalent bond with the surface of the main body and/or the outer surface, preferably the release promoting layer is absent and surface of the main body and the outer surface is a release promoting surface selected from polysilazanes, glass, metalloid oxides and aluminium oxide.

5. The process according to any one of claims 1 - 4, wherein the contacting of step (b) occurs at:
(A) at a temperature in the range of 35 - 150 °C and a pH in the range of 6.0 - 8.0;
(B) at a temperature in the range of 15 - 40 °C and a pH in the range of -1.0 - 6.5; or
(C) at a temperature in the range of 35 - 150 °C and a pH in the range of -1.0 - 6.5.

6. The process according to any one of claims 1 - 5, wherein:
(i) the surface of the main body and the outer surface is selected from glass, silicon oxide and polysilazane, the release promoting layer is absent and the encapsulant is as defined in claim 3 or 4, and wherein the contacting of step (b) occurs at a temperature in the range of 0 - 150 °C and the release medium comprises water optionally in combination with an acid, preferably wherein step (b) occurs at conditions (A) as defined in claim 5;
(ii) the release promoting layer is present and selected from silicon oxide and colloidal aluminium oxide, and the encapsulant is as defined in claim 3 or 4, and wherein the contacting of step (b) occurs at a temperature in the range of 0 - 150 °C and the release medium comprises water optionally in combination with an acid, preferably wherein step (b) occurs at conditions (A) as defined in claim 5;
(iii) the release promoting layer is present and selected from zinc oxide and indium tin oxide, wherein the release medium comprises an acid and has a pH in the range of -1.0 - 6.5, and wherein the contacting of step (b) occurs at a temperature in the range of 0 - 150 °C, preferably wherein step (b) occurs at conditions (B) as defined in claim 5;
(iv) the release promoting layer is present and selected from fluorine doped tin oxide and aluminium oxide, the encapsulant is as defined in claim 3 or 4, and wherein the contacting of step (b) occurs at a temperature in the range of 0 - 150 °C and the release medium comprises an acid and has a pH in the range of -1.0 - 6.5, preferably wherein step (b) occurs at conditions (B) as defined in claim 5.

7. The process according to any one of claims 1 - 6, which is for recycling of the encapsulated object and wherein the process further comprises:
(c) separating the encapsulant that is released from the object from the spent release medium;
(d) recycling the delaminated object from step (b) and/or the separated encapsulant from step (c) in the manufacture of a new version of the encapsulated object.

8. Use of a release promoting layer for the encapsulation of an object, wherein the release promoting layer is positioned between an encapsulant and the surface of a main body and/or between an encapsulant and an outer surface of the object;
preferably wherein during delamination of the encapsulated object the release promoting layer is dissolved in a releasing liquid at a release temperature in the range of 0 - 150 °C, to release the encapsulant from the encapsulated object.

9. Use of an encapsulant for the encapsulation of an object, wherein the encapsulant is positioned between a surface of a main body of the object and an outer surface of the object, wherein the encapsulant is as defined in claim 3 or 4;
preferably wherein during delamination of the encapsulated object the encapsulant is released from the encapsulated object in a releasing liquid at a release temperature in the range of 0 - 150 °C.

10. An encapsulated object, comprising:
(i) a main body and an outer surface, separated by an encapsulant;
(ii) the encapsulant that encapsulates at least part of the main body;
(iii) optionally a release promoting layer positioned between the main body and the encapsulant and/or between the outer surface and the encapsulant;
provided that when the release promoting layer is absent, the surface of the main body and the outer surface that is encapsulated is a release promoting surface selected from polysilazanes, metalloid oxides and aluminium oxide, and the encapsulant is as defined in claim 3 or 4.

11. The encapsulated object according to claim 10, wherein the release promoting layer is present and selected from oxides, hydroxides and carbonates of a metal or metalloid, which has a solubility in the range of 1 - 100 % in acidic water of pH = 1 and/or alkaline water of pH = 14, preferably a metal oxide, more preferably a layer of zinc oxide, colloidal aluminium oxide, silicon oxide or indium tin oxide, most preferably a layer of zinc oxide

12. The encapsulated object according to any one of claims 10 - 11, wherein the object is a solar panel having a front outer surface and a rear outer surface, wherein:
- at the front side, the outer surface is made from glass, wherein the release promoting layer may be present between the main body and the encapsulant, and wherein the encapsulant is as defined in claim 3 or 4; and
- at the back side, the outer surface is made from polymer or glass and the surface of the main body is made from aluminium oxide, wherein a release promoting layer is present between the main body and the encapsulant.

13. The encapsulated object according to any one of claims 10 - 12, wherein the release promoting layer is a zinc oxide or indium tin oxide layer, and wherein the object further comprises:
(iv) a photoprotective layer, positioned between the release promoting layer and the encapsulant.

14. A process for the manufacture of an encapsulated object, comprising:
(1) providing an object to be encapsulated having a main body;
(2) optionally coating a release promoting layer on at least a part of the surface of the main body;
(3) optionally coating a release promoting layer on at least a part of an outer surface;
(4) providing a stack of the main body optionally coated with the release promoting layer, an encapsulant and the outer surface optionally coated with the release promoting layer;
(5) laminating the stack to form the encapsulated object,
provided that when steps (2) and (3) are not performed, the surface of the main body and the outer surface that is encapsulated is a release promoting surface selected from polysilazanes, glass, metalloid oxides and aluminium oxide, and the encapsulant is as defined in claim 3 or 4.
